(19) Europäisches Patentamt
European Patent Office
Office européen des brevets

(11) EP 0 568 831 B1

(12) **EUROPÄISCHE PATENTSCHRIFT**

(45) Veröffentlichungstag und Bekanntmachung des Hinweises auf die Patenterteilung:
**11.09.1996 Patentblatt 1996/37**

(51) Int Cl.$^6$: **C08F 265/06**, C08F 291/00

(21) Anmeldenummer: **93105811.9**

(22) Anmeldetag: **08.04.1993**

(54) **Wässrige Polymerisatdispersion**

Aqueous polymer dispersion

Dispersion aqueuse de polymères

(84) Benannte Vertragsstaaten:
**BE DE ES FR GB IT NL SE**

(30) Priorität: **29.04.1992 DE 4213967**

(43) Veröffentlichungstag der Anmeldung:
**10.11.1993 Patentblatt 1993/45**

(73) Patentinhaber: **BASF Aktiengesellschaft**
**67063 Ludwigshafen (DE)**

(72) Erfinder:
- **Aydin, Oral, Dr.**
  **W-6800 Mannheim 1 (DE)**
- **Portugall, Michael, Dr.**
  **W-6706 Wachenheim (DE)**
- **Neutzner, Josef, Dr.**
  **W-6730 Neustadt (DE)**
- **Maechtle, Walter, Dr.**
  **W-6700 Ludwigshafen (DE)**

(56) Entgegenhaltungen:
**EP-A- 0 081 083** **EP-A- 0 129 699**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 568 831 B1

**Beschreibung**

Beschreibung

Die vorliegende Erfindung betrifft eine wäßrige Polymerisatenddispersion, die eine Feststoffvolumenkonzentration von wenigstens 50 Vol.-% und die Teilchengrößenverteilung

5 bis 30 Gew.-% des Polymerisats ≤ 200 nm
20 bis 55 Gew.-% des Polymerisats ≤ 300 nm
45 bis 70 Gew.-% des Polymerisats ≤ 400 nm
60 bis 85 Gew.-% des Polymerisats ≤ 600 nm
75 bis 95 Gew.-% des Polymerisats ≤ 800 nm
100 Gew.-% des Polymerisats ≤ 2000 nm

aufweist (Feststoffvolumen = Feststoffmasse dividiert durch Feststoffdichte), dadurch erhältlich, daß man wenigstens ein radikalisch polymerisierbares Monomeres unter Zusatz wenigstens einer wäßrigen Ausgangsdispersion I eines Ausgangspolymerisats I und unter Zusatz wenigstens einer wäßrigen Ausgangsdispersion II eines Ausgangspolymerisats II in einem Polymerisationsgefäß nach dem Verfahren der radikalischen wäßrigen Emulsionspolymerisation in Gegenwart grenzflächenaktiver Substanzen und radikalischer Polymerisationsinitiatoren mit der Maßgabe polymerisiert, daß

a) das Ausgangspolymerisat I in der wenigstens einen wäßrigen Ausgangsdispersion I in Form dispers verteilter Ausgangspolymerisatteilchen I vorliegt, deren von Null verschiedener gewichtsmittlerer Teilchendurchmesser kleiner oder gleich 50 nm ist,

b) die Masse des wenigstens einen zugesetzten Ausgangspolymerisats I, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, 0,2 bis 0,7 % beträgt,

c) das Ausgangspolymerisat II in der wenigstens einen wäßrigen Ausgangsdispersion II in Form dispers verteilter Ausgangspolymerisatteilchen II vorliegt, von deren Gesamtmasse höchsten 60 % einen von Null verschiedenen Teilchendurchmesser ≤ 200 nm und wenigstens 40 % einen Teilchendurchmesser > 200 nm aufweisen,

d) die Masse des wenigstens einen zugesetzten Ausgangspolymerisats II, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, 2 bis 20 % beträgt,

e) von der Gesamtmenge der wenigstens einen zuzusetzenden wäßrigen Ausgangsdispersion I vor Beginn der radikalischen wäßrigen Emulsionspolymerisation nichts ins Polymerisationsgefäß vorgelegt wird,

f) die Gesamtmenge der wenigstens einen zuzusetzenden wäßrigen Ausgangsdispersion II vor Beginn der radikalischen Emulsionspolymerisation ins Polymerisationsgefäß vorgelegt wird,

g) von der Gesamtmenge des wenigstens einen zu polymerisierenden Monomeren vor Beginn der radikalischen wäßrigen Emulsionspolymerisation nichts ins Polymerisationsgefäß vorgelegt wird,

h) die Gesamtmenge des wenigstens einen zu polymerisierenden Monomeren ab Beginn der radikalischen wäßrigen Emulsionspolymerisation dem Polymerisationsgefäß so zugeführt wird, daß zu jedem Zeitpunkt dieser Zufuhr der Polymerisationsumsatz der bereits zuvor dem Polymerisationsgefäß insgesamt zugeführten Monomeren, wenigstens 80 mol-% beträgt,

i) zu jedem Zeitpunkt nach Beginn der radikalischen wäßrigen Emulsionspolymerisation das Verhältnis V der Molzahl der dem Polymerisationsgefäß bereits zuvor in Form der wenigstens einen wäßrigen Ausgangsdispersion I zugeführten Teilchen an Ausgangspolymerisat I zu der Molzahl der dem Polymerisationsgefäß bereits zuvor zugeführten Menge des wenigstens einen radikalisch zu polymerisierenden Monomeren, normiert auf das Verhältnis der Molzahl der insgesamt in Form der wenigstens einen wäßrigen Ausgangsdispersion I zuzuführenden Ausgangspolymerisatteilchen zu der Molzahl der insgesamt radikalisch zu polymerisierenden Monomeren, im Bereich von > 0 bis 10 liegt,

j) nach Beendigung der Zufuhr der insgesamt zuzuführenden Menge der wenigstens einen wäßrigen Ausgangsdispersion I noch höchstens 20 mol-% der Gesamtmenge des wenigstens einen radikalisch zu polymerisierenden Monomeren dem Polymerisationsgefäß zugeführt werden,

k) die wenigstens eine zuzusetzende wäßrige Ausgangsdispersion I, bezogen auf ihren Gehalt an Ausgangspolymerisat I, wenigstens 10 bis 50 Gew.-% an grenzflächenaktiven Substanzen enthält,

l) die wenigstens eine zuzusetzende wäßrige Ausgangsdispersion II, bezogen auf ihren Gehalt an Ausgangspolymerisat II, wenigstens 1 bis 5 Gew.-% an grenzflächenaktiven Substanzen enthält,

m) die wäßrige Polymerisatenddispersion, bezogen auf die Gesamtmasse, gebildet aus der Masse des wenigstens einen radikalisch polymerisierbaren Monomeren und der in Form der wäßrigen Ausgangsdispersionen I, II zuzusetzenden Massen an Ausgangspolymerisaten I, II, 1 bis 5 Gew.-% grenzflächenaktive Substanzen enthält,

n) die zu jedem Zeitpunkt ab Beginn der radikalischen wäßrigen Emulsionspolymerisation im Polymerisationsgefäß enthaltene Menge an grenzflächenaktiven Substanzen, abzüglich der als in Form der unter k), l) genannten Mindestmengen ins Polymerisationsgefäß eingebrachten grenzflächenaktiven Substanzen, auf die dem Polymerisationsgefäß bereits zuvor zugeführten Monomeren bezogen, weniger als 5 Gew.-% beträgt und

o) die insgesamt eingesetzte Menge an radikalischen Polymerisationsinitiatoren, bezogen auf die Gesamtmenge des wenigstens einen radikalisch zu polymerisierenden Monomeren, 0,1 bis 5 Gew.-% beträgt und im Verlauf der radikalischen wäßrigen Emulsionspolymerisation dem Polymerisationsgefäß so zugegeben wird, daß sich die radikalische wäßrige Emulsionspolymerisation bis zu einem Mindestpolymerisationsumsatz der Gesamtmenge des wenigstens einen zu polymerisierenden Monomeren von wenigstens 90 mol-% fortsetzt.

Weiterhin betrifft die vorliegende Erfindung das Verfahren zur Herstellung solcher wäßriger Polymerisatenddispersionen sowie ihre Verwendung als Bindemittel und als Massen zur Herstellung von Beschichtungen und Verklebungen.

Wäßrige Polymerisatdispersionen sind Systeme, die als disperse Phase in einem wäßrigen Dispersionsmedium dispers verteilte Polymerisatteilchen enthalten.

Ebenso wie Polymerisatlösungen beim Verdampfen des Lösungsmittels, weisen wäßrige Polymerisatdispersionen beim Verdampfen des wäßrigen Dispersionsmediums die Eigenschaft auf, Polymerisatfilme zu bilden, weshalb wäßrige Polymerisatdispersionen in vielfacher Weise als Bindemittel, z.B. für Anstrichfarben oder für Massen zum Beschichten von Leder, Anwendung finden.

Wäßrige Polymerisatdispersionen mit hohem Polymerisatanteil sind insofern von besonderem Vorteil, als einerseits ihr relativ geringerer Anteil an wäßrigem Dispersionsmedium den Aufwand für das Verdampfen desselben, z.B. zur Filmbildung oder zur Herstellung von Polymerpulvern, reduziert und andererseits der Wertstoff Polymerisat in Anwendung einer relativ geringeren Menge wäßriger Phase als Trägermedium gelagert und transportiert werden kann.

Von Nachteil ist jedoch, daß mit zunehmender Volumenkonzentration (US-A 4,130,523) des Polymerisats die Herstellung wäßriger Polymerisatdispersionen problembehaftet ist. So nimmt einerseits der Fließwiderstand (die Viskosität) zu und erschwert sowohl die Abführung der Reaktionswärme als auch die Verarbeitung der wäßrigen Dispersion und andererseits wächst die Neigung der dispergierten Polymerisatteilchen sich aus Gründen der thermodynamischen Stabilität zusammenzulagern. Die dabei entstehenden Ausflockungen [a) Mikroflockungen oder Stippen; sie können durch herkömmliche Filtration in der Regel nicht abgetrennt werden; b) Makroflockungen oder Koagulat; ist normalerweise durch übliche Filtration abtrennbar;] führen insbesondere zu Störungen in den Verfilmungen der wäßrigen Polymerisatdispersionen und sind daher in der Regel unerwünscht.

Nach Untersuchungen über den Fließwiderstand wäßriger Polymerisatdispersionen weisen solche mit einer breiten Größenverteilung (polydispers) der dispergierten Polymerisatteilchen bei gleichem Feststoffgehalt in der Regel einen geringeren Fließwiderstand auf als solche mit einer engen Größenverteilung (im Grenzfall monodispers). Ferner zeigen grobteilige wäßrige Polymerisatdispersionen unter der Prämisse gleichen Feststoffgehalts einen geringeren Fließwiderstand als feinteilige wäßrige Polymerisatdispersionen.

Aus der EP-A 129 699 ist ein Verfahren zur Herstellung einer wäßrigen Polymerisatdispersion bekannt, bei dem man in einem Polymerisationsgefäß nach dem Verfahren der radikalischen wäßrigen Emulsionspolymerisation ungesättigte Monomere in an sich bekannter Weise polymerisiert und dabei eine wäßrige Dispersion eines Ausgangspolymerisats zusetzt, wobei der Zusatz der wäßrigen Dispersion des Ausgangspolymerisats abgeschlossen sein muß, bevor 40 Gew.-% der insgesamt zu polymerisierenden Monomeren einpolymerisiert sind sowie frühestens dann erfolgen darf, wenn die mittlere Teilchengröße des bei der Polymerisation der Monomeren entstehenden Emulsionspolymerisats den zweifachen Wert der mittleren Teilchengröße der wäßrigen Dispersion des Ausgangspolymerisats aufweist. Vorzugsweise wird dabei die wäßrige Dispersion des Ausgangspolymerisats nicht über einen längeren Zeitraum,

sondern auf einmal zugegeben.

Nachteilig an den so erhältlichen wäßrigen Polymerisatdispersionen ist, daß ihr Fließwiderstand oberhalb einer Feststoffvolumenkonzentration von 50 Vol.-% nicht voll zu befriedigen vermag und gemäß den Ausführungsbeispielen die Feststoffvolumenkonzentration auf Werte unter 65 Vol.-% beschränkt ist.

Die US-A 4,130,523 betrifft ein Verfahren zur Herstellung wäßriger Polymerisatdispersionen, bei dem während des Polymerisationsprozesses laufend bereits gebildete wäßrige Polymerisatdispersion aus der Reaktionszone entfernt, gelagert und später der Reaktionszone als eine Art Ausgangspolymerisatdispersion wieder zugeführt wird. Nachteilig an diesem Verfahren ist, daß es für eine großtechnische Realisierung ungeeignet ist.

Die US-A 3,424,706 bezieht sich auf ein Verfahren zur Herstellung wäßriger Polymerisatdisperionen, deren Polymerisate wenigstens 70 bis 97 Gew.-% Vinylidenchlorid einpolymerisiert enthalten, bei dem die Polymerisation der Monomeren unter Zusatz einer wäßrigen Dispersion eines Ausgangspolymerisats erfolgt. Unter anderem enthält die US-A 3,424,706 den Hinweis, die zu polymerisierenden Monomeren und die wäßrige Dispersion des Ausgangspolymerisats miteinander zu vermischen und dieses Gemisch der einen Teil des Polymerisationsansatzes umfassenden Vorlage zuzuführen.

Nachteilig an diesem Verfahren ist, daß es auf Monomerengemische beschränkt ist, die hauptsächlich Vinylidenchlorid enthalten. Darüber hinaus vermag gemäß den Ausführungsbeispielen auch bei den nach diesem Verfahren erhältlichen wäßrigen Polymerisatdispersionen sowohl der Fließwiderstand oberhalb einer Feststoffvolumenkonzentration von 50 Vol.-%, als auch die in noch befriedigend fließfähigem Zustand erreichbare Obergrenze der Feststoffvolumenkonzentration nicht zu befriedigen.

Ziel der vorliegenden Erfindung war daher, wäßrige Polymerisatdispersionen zur Verfügung zu stellen, die in einfacher, großtechnisch geeigneter, reproduzierbarer und nicht auf spezielle Monomere beschränkter Weise bei erhöhter Feststoffvolumenkonzentration mit reduziertem Fließwiderstand sowie reduziertem Gehalt an Ausflockungen erhältlich sind.

Demgemäß wurden die eingangs definierten wäßrigen Polymerisatenddispersionen gefunden.

Bemerkenswerterweise ist der erfindungsgemäße Gegenstand nicht auf die radikalische wäßrige Emulsionspolymerisation von hauptsächlich oder ausschließlich aus Vinyl- und/oder Vinylidenhalogeniden zusammengesetzten Monomerengemischen beschränkt, ist doch allgemein bekannt, daß die Entwicklung der dispersen Phase im Fall von Vinyl- und/oder Vinylidenhalogeniden verschiedenen Monomeren ein wesentlich komplexeres Erscheinigungsbild aufweist.

Für das erfindungsgemäße Verfahren kommen daher als radikalisch polymerisierbare Monomere unter anderen insbesondere monoethylenisch ungesättigte Monomere wie Olefine, z.B.

Ethylen, vinylaromatische Monomere wie Styrol, α-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methyacrylsäuremethyl-, -ethyl, -n-butyl, -iso-butyl und -2-ethylhexylester, Maleinsäuredimethylester oder Maleinsäure-n-butylester, Nitrile α,β-monoethylenisch ungesättigter Carbonsäuren wie Acrylnitril sowie $C_{4-8}$-konjugierte Diene wie 1,3-Butadien und Isopren in Betracht. Die genannten Monomeren bilden in der Regel die Hauptmonomeren, die, bezogen auf die Gesamtmenge der nach dem Verfahren der radikalischen wäßrigen Emulsionspolymeri sation zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatenddispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyl- oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten-Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate- und dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Beeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan sowie 3-Mercaptopropyltrimethoxysilan miteinpolymerisiert werden. Vorzugsweise werden derartige Substanzen im Gemisch mit den zu polymerisierenden Monomeren der Polymerisationszone zugegeben.

Als grenzflächenaktive Substanzen kommen sowohl die zur Durchführung von radikalischen wäßrigen Emulsionspolymerisationen üblicherweise eingesetzten Schutzkolloide als auch Emulgatoren in Betracht. Geeignete Schutzkolloide sind beispielsweise Polyvinylalkohole, Cellulosederivate oder Vinylpyrrolidon enthaltende Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Selbstverständlich können auch Gemische aus Emulgatoren und/oder Schutzkolloiden verwendet werden. Vorzugsweise werden als grenzflächenaktive Substanzen ausschließlich Emulgatoren eingesetzt, deren relative Molekulargewichte im Unterschied zu den Schutzkolloiden üblicherweise unter 1000 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nicht-ionischen Emulgatoren verträglich. Desgleichen gilt auch für kationische Emulgatoren, während anionische und kationische Emulgatoren meistens miteinander unverträglich sind. Gebräuchliche Emulgatoren sind z.B. ethoxylierte Mono-, Di- und Tri-Alkylphenole (EO-Grad: 3 bis 50, Alkylrest: $C_4$ bis $C_9$), ethoxylierte Fettalkohole (EO-Grad: 3 bis 50, Alkylrest: $C_8$ bis $C_{36}$), sowie Alkali- und Ammoniumsalze von Alkylsulfaten (Alkylrest: $C_8$ bis $C_{12}$), von Schwefelsäurehalbestern ethoxylierter Alkanole (EO-Grad: 4 bis 30, Alkylrest: $C_{12}$ bis $C_{18}$) und ethoxylierter Alkylphenole (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg-Thieme Verlag, Stuttgart, 1961, Seiten 192 bis 208.

Als besonders geeignete grenzflächenaktive Substanzen haben sich Verbindungen der allgemeinen Formel I

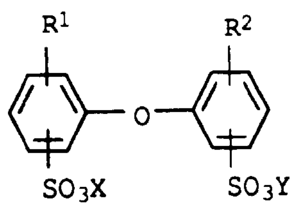

(I),

worin $R^1$ und $R^2$ Wasserstoff oder $C_4$- bis $C_{24}$-Alkyl bedeuten und nicht gleichzeitig Wasserstoff sind, und X und Y Alkalimetallionen und/oder Ammoniumionen sein können, erwiesen. In der Formel I bedeuten $R^1$ und $R^2$ bevorzugt lineare oder verzweigte Alkylreste mit 6 bis 18 C-Atomen oder Wasserstoff, und insbesondere mit 6,12 und 16 C-Atomen, wobei $R^1$ und $R^2$ nicht beide gleichzeitig Wasserstoff sind. X und Y sind bevorzugt Natrium, Kalium oder Ammoniumionen, wobei Natrium besonders bevorzugt ist. Besonders vorteilhaft sind Verbindungen I in denen X und Y Natrium, $R^1$ ein verzweigter Alkylrest mit 12 C-Atomen und $R^2$ Wasserstoff oder $R^1$ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company). Vorzugsweise werden die Verbindungen I im erfindungsgemäßen Verfahren für sich und besonders bevorzugt im Gemisch mit ethoxylierten Fettalkoholen (EO-Grad: 3 bis 50, Alkylrest: $C_8$- bis $C_{36}$) als grenzflächenaktive Substanzen eingesetzt. Die Verbindungen I sind allgemein bekannt, z.B. aus der US-A 4,269,749, und im Handel erhältlich. Mit Vorteil enthält die erfindungsgemäße wäßrige Polymerisatenddispersion, bezogen auf die Masse des Endpolymerisats, 1 bis 3 Gew.-% an grenzflächenaktiven Substanzen.

Als radikalische Polymerisationsinitiatoren kommen alle diejenigen in Betracht, die in der Lage sind, eine radikalische wäßrige Emulsionspolymerisation auszulösen. Es kann sich dabei sowohl um Peroxide, z.B. Alkalimetallperoxidisulfate, als auch um Azoverbindungen handeln. Vorzugsweise werden kombinierte Systeme, die aus wenigstens einem organischen Reduktionsmittel und wenigstens einem Peroxid und/oder Hydroperoxid zusammengesetzt sind, z.B. tert.-Butylhydroperoxid und das Natriummetallsalz der Hydroxymethansulfinsäure oder Wasserstoffperoxid und Ascorbinsäure, und ganz besonders bevorzugt kombinierte Systeme, die darüber hinaus eine geringe Menge einer im Polymerisationsmedium löslichen Metallverbindung, deren metallische Komponente in mehreren Wertigkeitsstufen

auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetalldisulfit und anstelle von Wasserstoffperoxid tert. Butylhydroperoxid oder Alkalimetallperoxidisulfate und/ oder Ammoniumperoxidisulfat angewendet werden. Anstelle eines wasserlöslichen Eisen (II)-salzes wird häufig eine Kombination aus wasserlöslichen Fe/V-Salzen benutzt. Vorzugsweise beträgt die Menge der eingesetzten radikalischen Initiatorsysteme, bezogen auf die Gesamtmenge der zu polymerisierenden Monomeren, 0,1 bis 2 Gew.-%.

Die Art und Weise, in der das radikalische Initiatorsystem im Verlauf der erfindungsgemäßen radikalischen wäßrigen Emulsionspolymerisation dem Polymerisationsgefäß zugegeben wird, ist hinsichtlich des Erfolgs des erfindungsgemäßen Verfahrens eher von untergeordneter Bedeutung. Das Initiatorsystem kann sowohl vollständig in das Polymerisationsgefäß vorgelegt, als auch nach Maßgabe seines Verbrauchs im Verlauf der radikalischen wäßrigen Emulsionspolymerisation kontinuierlich oder stufenweise zugesetzt werden. Im einzelnen hängt dies in an sich dem Durchschnittsfachmann bekannter Weise sowohl von der chemischen Natur des Initiatorsystems als auch von der Polymerisationstemperatur ab.

Polymerisationsdruck und Polymerisationstemperatur sind gleichfalls von eher untergeordneter Bedeutung. Im allgemeinen arbeitet man bei Temperaturen zwischen Raumtemperatur und 100°C, vorzugsweise bei Temperaturen von 50 bis 95°C. Die Anwendung von erhöhtem oder vermindertem Druck ist möglich, so daß die Polymerisationstemperatur auch 100°C überschreiten und bis zu 130°C betragen kann. Vorzugsweise werden leichtflüchtige Monomere wie Ethylen, Butadien oder Vinylchlorid unter erhöhtem Druck polymerisiert. Zur pH-Wert Regulierung des Polymerisationsmediums kann während der erfindungsgemäßen radikalischen wäßrigen Emulsionspolymerisation beispielsweise Ammoniak zugegeben werden.

Die für die erfindungsgemäße radikalische wäßrige Emulsionspolymerisation beispielhaft als geeignet genannten radikalisch polymerisierbaren Monomeren eignen sich nicht nur als Konstituenten des erfindungsgemäß zu polymerisierenden Monomerengemisches. Vielmehr eignen sie sich in gleicher Weise wie die für die erfindungsgemäße radikalische wäßrige Emulsionspolymerisation empfohlenen Polymerisationsinitiatoren, das Molekulargewicht regelnden Verbindungen und den pH-Wert regulierenden Mittel auch als Konstituenten der Ausgangspolymerisate I, II, bzw. der diese enthaltenden Ausgangsdispersionen, wobei die Monomeren-, Regler- und Initiatorenzusammensetzung zur Herstellung der wäßrigen Ausgangsdispersionen I, II mit derjenigen für das erfindungsgemäße Verfahren sowohl dekkungsgleich als auch verschieden sein kann. Die ebenda gemachten Aussagen gelten im übertragenen Sinn notwendigerweise auch für die zur Herstellung der wäßrigen Ausgangsdispersionen I, II einzusetzenden grenzflächenaktiven Substanzen, sind doch bei dem erfindungsgemäßen Verfahren, bezogen auf die Mengen der Ausgangspolymerisate I bzw. II, wenigstens 10 bis 50 (Ausgangsdispersion I) bzw. wenigstens 1 bis 5 Gew.-% (Ausgangsdispersion II) der abschließend in der erfindungsgemäßen wäßrigen Polymerisatenddispersion enthaltenen grenzflächenaktiven Substanzen bereits Bestandteil der zuzusetzenden wäßrigen Ausgangsdispersionen I, II. Es handelt sich hierbei um die Mengen an grenzflächenaktiven Substanzen, die in der Regel zur Herstellung von stabilen wäßrigen Ausgangsdispersionen I, II wenigstens erforderlich sind.

Erfindungsgemäß zuzusetzende wäßrige Ausgangsdispersionen I eines Ausgangspolymerisats I, in denen das Ausgangspolymerisat I in Form dispers verteilter Ausgangspolymerisatteilchen mit einem von Null verschiedenen gewichtsmittleren Teilchendurchmesser $\bar{d}_w$ kleiner oder gleich 50, bevorzugt 25 bis 45 nm, vorliegt, sind in an sich bekannter Weise erhältlich. Entsprechende Lehren sind z.B. in Houben-Weyl, Methoden der Organischen Chemie, Band E 20, Teil I, Makromolekulare Stoffe, Georg-Thieme-Verlag, Stuttgart, 1987, Seiten 248 bis 268 zu finden. Bei einem vorzugsweise angewendeten Feststoffgehalt von 20 bis 40 Gew.-%, sind die Ausgangsdispersionen I in besonders einfacher Weise z.B. dadurch erhältlich, daß man die wäßrige Phase, die Monomeren, die radikalischen Initiatoren (normalerweise 0,1 bis 5 Gew.-%, bezogen auf die Menge der zu polymerisierenden Ausgangsmonomeren) und grenzflächenaktiven Substanzen (üblicherweise 10 bis 50 Gew.-%, bezogen auf die zu polymerisierenden Ausgangsmonomeren) bei niederer Temperatur miteinander vermischt und nach Vermischen auf die Polymerisationstemperatur erwärmt und polymerisiert (zunehmende Mengen an grenzflächenaktiver Substanz bedingen in der Regel einen abnehmenden Teilchendurchmesser $\bar{d}_w$. Bei einer anderen Variante umfaßt die Vorlage im wesentlichen alle Komponenten, der Polymerisationsinitiator wird jedoch nach Erwärmen auf Reaktionstemperatur unter Aufrechterhalten derselben kontinuierlich zugeführt. Hinsichtlich Polymerisationstemperatur und Druck gelten die bezüglich des erfindungsgemäßen Verfahrens gemachten Aussagen. Wäßrige Ausgangsdispersionen I, die eine breite Teilchenverteilung aufweisen, werden bevorzugt. Ferner sind solche Ausgangsdispersionen I bevorzugt, die als grenzflächenaktive Substanzen ausschließlich solche der allgemeinen Formel I enthalten.

Ausgangsdispersionen II sind ebenfalls in dem Fachmann an sich bekannter Weise erhältlich. Im wesentlichen können sie wie die Ausgangsdispersionen I hergestellt werden, jedoch mit dem Unterschied, daß die eingesetzte Menge grenzflächenaktiver Substanzen, bezogen auf die zu polymerisierenden Monomeren, in der Regel lediglich 1 bis 5 Gew.-% beträgt. Bevorzugte Ausgangsdispersionen II sind solche, die eine breite Teilchenverteilung aufweisen. Als solche kommen insbesondere die wäßrigen Polymerisatdispersionen gemäß Hauptanspruch der EP-A-0 567 811 in Betracht, die in der Regel folgende Teilchengrößenverteilung aufweisen:

5 bis 25 Gew.-% des Polymerisats ≤ 200 nm
15 bis 40 Gew.-% des Polymerisats < 400 nm
35 bis 75 Gew.-% des Polymerisats ≤ 600 nm
45 bis 90 Gew.-% des Polymerisats ≤ 800 nm
100 Gew.-% des Polymerisats ≤ 1600 nm.

Ferner sind als Ausgangsdispersionen II die wäßrigen Polymerisatdispersionen gemäß Anspruch 6 der EP-A-0 568 834 geeignet.

Werden Ausgangsdispersionspolymerisate II mit enger Teilchenverteilung eingesetzt, beträgt ihre im erfindungsgemäßen Verfahren zugesetzte Masse, bezogen auf die Gesamtmasse, gebildet aus der Masse des wenigstens einen radikalisch polymerisierbaren Monomeren und der in Form wäßriger Ausgangsdispersionen I, II zugesetzten Massen an Ausgangspolymerisaten I, II vorzugsweise 2 bis 10, besonders bevorzugt 2 bis 5 Gew.-%.

Ganz besonders bevorzugt werden als Ausgangsdispersionen II Polymerisatenddispersionen eingesetzt, die ihrerseits bereits nach dem hier offenbarten erfindungsgemäßen Verfahren erhalten worden sind. Wenigstens ein Teil der dabei erhältlichen wäßrigen Polymerisatenddispersionen kann seinerseits wieder als Ausgangsdispersion II eingesetzt werden u.s.w.. Arbeitet man im Rahmen einer solchen zyklischen Verfahrensweise ansonsten unter Erhalt konstanter Mengen und Ausgangsstoffe, so resultiert in bemerkenswerter Weise in der Regel unabhängig von der Dispersität der Teilchenverteilung der Ursprungs-Ausgangsdispersion II spätestens nach dem dritten Zyklus eine Polymerisatenddispersion, deren anwendungstechnische Eigenschaften (Fließvermögen) sich beim Durchlaufen weiterer Zyklen in der Regel nur noch außerhalb der Maßgenauigkeit ändern. Diese zyklische Verfahrensweise bietet insbesondere eine elegante Möglichkeit, die erfindungsgemäßen wäßrigen Polymerisatenddispersionen mit im wesentlichen konstanter Qualität in einfacher Weise großtechnisch aufeinanderfolgend zu produzieren, indem man einen konstanten Anteil der jeweils resultierenden Polymerisatenddispersion, gegebenenfalls nach Verdünnen, im darauffolgenden Zyklus als Ausgangsdispersion II einsetzt und die übrigen Verfahrensparameter beibehält. Die großtechnische Realisierung einer derartigen zyklischen Verfahrensweise erweist sich als besonders einfach, wenn man am Ende eines Zyklus aus dem die Polymerisatenddispersion enthaltenden Polymerisationsgefäß jeweils nur einen Teil der Polymerisatenddispersion (üblicherweise 80 bis 90 Gew.-%) abläßt und den verbleibenden Teil, gegebenenfalls nach Verdünnen, im nächsten Zyklus als Ausgangsdispersion II benutzt u.s.w.. Unter konstanten Bedingungen wird, wie bereits erwähnt, in der Regel nach drei Zyklen ein im wesentlichen stationärer Zustand, d.h. ein im wesentlich qualitativ gleichbleibendes (Fließvermögen) Endprodukt, erreicht. Normalerweise werden die Ausgangsdispersionen II mit einem Feststoffgehalt von 40 bis 60 Gew.-% für das erfindungsgemäße Verfahren eingesetzt. In der Regel sind die Teilchendurchmesser der Ausgangsdisersion II ≦ 2000 nm. Selbstverständlich kann die erfindungsgemäß zu verwendende wäßrige Ausgangsdispersion II auch unmittelbar vor Beginn des eigentlichen erfindungsgemäßen Verfahrens im selben Polymerisationsgefäß fertiggestellt werden, sei es, daß man zu diesem Zweck im Polymerisationsgefäß beispielsweise verschiedene Polymerisatdispersionen miteinander mischt (einfacher Weg zur Herstellung einer wäßrigen Ausgangsdispersion II mit breiter Teilchenverteilung) und/oder darin eine radikalische wäßrige Emulsionspolymerisation durchführt.

Im letzteren Fall können beide Emulsionspolymerisationsverfahren nahtlos ineinander übergehen, insbesondere dann, wenn zur Fertigstellung der wäßrigen Ausgangsdispersion II das Zulaufverfahren angewendet wird, bei dem man einen Teil des Polymerisationsansatzes vorlegt, auf die Polymerisationstemperatur erhitzt und unter Aufrechterhaltung der Polymerisation anschließend den Rest in gegebenenfalls räumlich getrennten Zuläufen zuführt. Selbstverständlich kann sich im Verlauf der erfindungsgemäßen wäßrigen radikalischen Emulsionspolymerisation sowohl die Zusammensetzung der zuzuführenden Monomeren, als auch die Zusammensetzung der zuzuführenden wäßrigen Ausgangsdispersion I ändern. Ferner können die Zufuhren sowohl stufenförmig als auch kontinuierlich oder nach der Gradientenfahrweise erfolgen. Vorzugsweise erfolgt die Zufuhr der zu polymerisierenden Monomeren relativ zur Zufuhr der wenigstens einen wäßrigen Ausgangsdispersion I so, daß V zu jedem Zeitpunkt nach Beginn der erfindungsgemäßen wäßrigen Emulsionspolymerisation im Bereich > 0 bis 5 liegt. Dabei wird sowohl für die zu polymerisierenden Monomeren als auch die wenigstens eine wäßrige Ausgangsdispersion I eine kontinuierliche Zufuhr bevorzugt. Mit besonderem Vorteil werden die zu polymerisierenden Monomeren und die wenigstens eine zuzuführende wäßrige Ausgangsdispersion I in kontinuierlicher Weise zeitgleich beginnend synchron zugeführt, wobei die Zufuhr beider vorzugsweise zeitgleich endet. Darüber hinaus werden die zu polymerisierenden Monomeren der Reaktionszone in vorteilhafter Weise so zugeführt, daß zu jedem Zeitpunkt dieser Zufuhr der Polymerisationsumsatz der bereits zuvor dem Polymerisationsgefäß zugeführten Monomeren wenigstens 90, besonders bevorzugt wenigstens 98 mol-% beträgt. Die zu polymerisierenden Monomeren können sowohl für sich, als auch in wäßriger Phase voremulgiert zugeführt werden. Werden wäßrige Polymerisatenddispersionen mit besonders hoher Feststoffvolumenkonzentration angestrebt, erfolgt die Zufuhr der zu polymerisierenden Monomeren vorzugsweise für sich. Zweckmäßigerweise enthält das Polymerisationsgefäß vor Beginn der erfindungsgemäßen radikalischen Emulsionspolymerisation lediglich einen Teil der radikalischen Polymerisationsinitiatoren, wohingegen die übrigen radikalischen Polymerisationsinitiatoren der

Polymerisationszone ab Beginn der erfindungsgemäßen radikalischen Emulsionspolymerisation in der Regel über einen räumlich getrennten Zulauf zugeführt werden, wobei diese Zufuhr vorzugsweise synchron zur Zufuhr der zu polymerisierenden Monomeren erfolgt, sich im allgemeinen jedoch über die Dauer derselben hinaus erstreckt. Der Start der erfindungsgemäßen wäßrigen radikalischen Emulsionspolymerisation erfolgt daher im allgemeinen so, daß einer bereits Polymerisationsinitiatoren enthaltenden Vorlage, nach Erwärmen auf die Polymerisationstemperatur, zu polymerisierende Monomere zugeführt werden, oder daß diese Zufuhr von einer Initiatorzufuhr begleitet wird, falls die auf Polymerisationstemperatur erwärmte Vorlage solche nicht enthält. Werden ab Beginn der erfindungsgemäßen radikalischen wäßrigen Emulsionspolymerisation über die in der wenigstens einen wäßrigen Ausgangsdispersion I notwendigerweise enthaltenen Mindestmengen an grenzflächenaktiven Substanzen, bezogen auf das Ausgangspolymerisat I 10 bis 50 Gew.-%, hinaus grenzflächenaktive Substanzen dem Polymerisationsgefäß zugeführt, so erfolgt diese Zufuhr mit Vorteil so, daß die zu jedem Zeitpunkt ab Beginn der erfindungsgemäßen radikalischen wäßrigen Emulsionspolymerisation im Polymerisationsgefäß enthaltene Menge an grenzflächenaktiven Substanzen, abzüglich der als in Form der unter k), l) genannten Mindestmengen ins Polymerisationsgefäß eingebrachten grenzflächenaktiven Substanzen, auf die dem Polymerisationsgefäß bereits zugeführten Monomeren bezogen, weniger als 3 Gew.-% beträgt. Vorzugsweise erfolgt diese Zufuhr synchron zur Monomerenzufuhr.

Nach Beendigung des eigentlichen erfindungsgemäßen Polymerisationsverfahrens wird vorzugsweise noch einige Stunden unter Aufrechterhaltung der Polymerisationstemperatur nachgerührt. Daran können sich übliche Maßnahmen zur Restmonomerenentfernung, zur Einstellung eines anderen pH-Wertes oder sonstige Methoden zur Nachstabilisierung, inklusive nachträglicher Zugabe grenzflächenaktiver Substanzen, anschließen. Selbstverständlich können die verschiedenen möglichen, in der Regel räumlich getrennt erfolgenden, Zuläufe unmittelbar vor Eintritt in das Polymerisationsgefäß miteinander vermischt werden.

Bevorzugte Klassen von Endpolymerisaten sind solche, die

- zu 70 bis 100 Gew.-% aus Estern der Acryl- und/oder Methacrylsäure mit 1 bis 12 C-Atome aufweisenden Alkanolen und/oder Styrol

oder

- zu 70 bis 100 Gew.-% aus Styrol und/oder Butadien

oder

- zu 70 bis 100 Gew.-% aus Vinylchlorid und/oder Vinylidenchlorid

aufgebaut sind, wobei die Klasse der Acrylate besonders bevorzugt ist und vorzugsweise nachfolgende Monomerenzusammensetzungen umfaßt:

70 bis 99 Gew.-% wenigstens eines Esters der Acryl- und/oder Methacrylsäure mit 1 bis 8 C-Atome aufweisenden Alkanolen,

1 bis 5 Gew.-% Acrylsäure, Methacrylsäure oder deren Gemisch und

0 bis 25 Gew.-% Vinylacetat, Styrol oder deren Gemisch.

Bei der erfindungsgemäßen radikalischen wäßrigen Emulsionspolymerisation lassen sich in einfacher Weise wäßrige Polymerisatenddispersionen erhalten, die eine sehr breite Teilchenverteilung aufweisen, welche sich wie folgt charakterisieren läßt:

5 bis 30 Gew.-% des Endpolymerisats ≤ 200 nm
20 bis 55 Gew.-% des Endpolymerisats ≤ 300 nm
45 bis 70 Gew.-% des Endpolymerisats ≤ 400 nm
60 bis 85 Gew.-% des Endpolymerisats ≤ 600 nm
75 bis 95 Gew.-% des Endpolymerisats ≤ 800 nm
100 Gew.-% des Endpolymerisats ≤ 2000 nm.

Diese spezielle Teilchengrößenverteilung ist vermutlich für den reduzierten Fließwiderstand der erfindungsgemäßen wäßrigen Polymerisatenddispersionen verantwortlich, die normalerweise Newton'sches Fließverhalten aufweisen. Die Teilchengrößenverteilung (Die Teilchengrößenbestimmungen an den eine weniger breite Teilchengrößenverteilung

aufweisenden wäßrigen Ausgangsdispersionen erfolgte ebenfalls mit der analytischen Ultrazentrifuge (vgl. W. Mächtle, Makromolekulare Chemie, Bd. 185 (1984), S. 1025-1039).) wurde mit der sogenannten Coupling-PSD-Technik in der analytischen Ultrazentrifuge bestimmt (siehe W. Mächtle, Angewandte Makromolekulare Chemie 162 (1988) 35-42 (Nr. 2735). Unterhalb einer Feststoffvolumenkonzentration von 50 Vol.-% nimmt der Einfluß der Teilchengrößenverteilung auf den Fließwiderstand zunehmend ab. Die erfindungsgemäßen wäßrigen Polymerisatenddispersionen werden wie beschrieben in der Regel mit voll befriedigender Reproduzierbarkeit und in Abwesenheit von Ausflokkungen mit Feststoffvolumenkonzentrationen von bis zu 75 Vol.-% in großtechnisch einfach realisierbarer Weise erhalten.

Besonders ausgeprägt entfalten die erfindungsgemäßen wäßrigen Polymerisatenddispersionen ihre vorteilhaften Eigenschaften bei Feststoffvolumenkonzentrationen oberhalb von 65 Vol.-%, weshalb solche Polymerisatenddispersionen bevorzugt sind. Sie eignen sich generell als Bindemittel sowie als Massen zur Herstellung von Beschichtungen und Verklebungen, wobei diesbezüglich in an sich bekannter Weise zusätzliche Hilfsstoffe wie Filmbildehilfsmittel, Füllstoffe oder Weichmacher zugesetzt werden können.

Beispiele

Beispiel 1

Herstellung von Ausgangsdispersionen I

AIa): In ein Gemisch aus

| | |
|---|---|
| 65,4 kg | Wasser |
| 25 kg | n-Butylacrylat und |
| 22,25 kg | einer 45 gew.-%igen wäßrigen Lösung der Dowfax 2A1 entsprechenden grenzflächenaktiven Substanz |

wurde bei Raumtemperatur zunächst eine Lösung von 0,0625 kg Ascorbinsäure und 0,005 kg Eisen(II)-sulfat in 2 kg Wasser eingerührt und anschließend innerhalb von 3 Minuten ein Gemisch aus 2 kg Wasser und 0,65 kg einer 30 gew.-%igen wäßrigen Wasserstoffperoxidlösung zugegeben. Anschließend wurde die Temperatur während 1 h auf 52°C gehalten. Danach wurde auf Raumtemperatur abgekühlt und nach Zugabe einer Mischung von 0,05 kg Ascorbinsäure in 1 kg Wasser noch 2 h nachgerührt.

Die so erhältliche wäßrige Ausgangsdispersion Ia) wies eine Feststoffvolumenkonzentration von 28,5 Vol.-% (Feststoffgehalt = 30,2 Gew.-%), und einen gewichtsmittleren Teilchendurchmesser $\bar{d}_w$ von 32 nm auf.

AIb): Ein Gemisch der Zusammensetzung

| | |
|---|---|
| 51,12 kg | Wasser |
| 0,40 kg | einer 30 gew.-%igen wäßrigen $H_2O_2$ Lösung |
| 20 kg | n-Butylacrylat |
| 18,80 kg | einer 45 gew.-%igen wäßrigen Lösung der Dowfax 2A1 entsprechenden grenzflächenaktiven Substanz |

wurde bei 25°C auf einmal mit 50 Gew.-% des Zulauf versetzt und dann auf 50°C erwärmt. Anschließend wurde innerhalb von 30 min unter Aufrechterhaltung der 50°C die Restmenge des Zulauf kontinuierlich zugesetzt. Abschließend wurde noch 1 h bei 50°C nachgerührt.

Zulauf:

| | |
|---|---|
| 4 kg | Wasser |
| 0,20 kg | Ascorbinsäure |
| 0,001 kg | Eisen(II)-sulfat |

Die so erhältlich wäßrige Ausgangsdispersion Ib) wies eine Feststoffvolumenkonzentration von 28,5 Vol.-% (Feststoffgehalt = 30,1 Gew.-%) und einen gewichtsmittleren Teilchendurchmesser $\bar{d}_w$ von 44 nm auf.

Beispiel 2

Herstellung von Ausgangsdispersionen II

AIIa): Ein Gemisch der Zusammensetzung

| | |
|---|---|
| 546 g | Wasser |
| 1,35 g | Ascorbinsäure |
| 60 g | Zulauf II |

wurde auf 85°C erhitzt und zeitgleich beginnend kontinuierlich mit der Restmenge des Zulauf II (innerhalb von 3,5 h) und mit Zulauf I (innerhalb von 3 h) unter Aufrechterhaltung der 85°C versetzt. Nach Abschluß der Zugabe der Restmenge des Zulauf II wurde bei 85°C noch 1 h nachgerührt.

Zulauf I:

| | |
|---|---|
| 573 g | Wasser |
| 1764 g | n-Butylacrylat |
| 36 g | Methacrylsäure |
| 180 g | einer 20 gew.-%igen wäßrigen Lösung der Dowfax 2A1 entsprechenden grenzflächenaktiven Substanz |
| 0,45 g | Ascorbinsäure |

Zulauf II:

| | |
|---|---|
| 600 g | Wasser |
| 9 g | Natriumperoxidisulfat |

Die so erhältliche wäßrige Ausgangsdispersion IIa) wies eine Feststoffvolumenkonzentration von 45,7 Vol.-% (Feststoffgehalt = 49,3 Gew.-%) und bei im wesentlichen monodisperser Teilchenverteilung einen Teilchendurchmesser $\bar{d}_w$ von 294 nm auf.

AIIb): Ein Gemisch der Zusammensetzung

| | |
|---|---|
| 11,67 g | wäßrige Ausgangsdispersion AIa) aus Bsp. 1 |
| 4,375 g | einer 20 gew.-%igen wäßrigen Lösung der Dowfax 2A1 entsprechenden grenzflächenaktiven Substanz |
| 17,50 g | einer 30 gew.-%igen wäßrigen $H_2O_2$ Lösung |
| 40,5 g | Zulauf II |
| 600 g | Wasser |

wurde auf 60°C erhitzt und unter Aufrechterhaltung dieser Temperatur zeitgleich beginnend kontinuierlich mit der Restmenge des Zulauf II sowie mit Zulauf I versetzt, was sich zeitlich wie folgt gestaltete:

Zulauf I:

5 Gew.-% in 30 min,
dann 95 Gew.-% in 150 min

Zulauf II:

90 Gew.-% in 210 min.
(Gew.-% auf die jeweilige Gesamtmenge bezogen)

Zulauf III wurde 30 min nach Beginn der Zufuhr von Zulauf I kontinuierlich innerhalb von 120 min zugeführt.

Zulauf I:

| | |
|---|---|
| 1645 g | n-Butylacrylat |
| 70 g | Ethylacrylat |
| 35 g | Methacrylsäure |
| 70 g | einer 20 gew.-%igen wäßrigen Lösung der Dowfax 2A1 entsprechenden grenzflächenaktiven Substanz |
| 175 g | einer 20 gew.-%igen wäßrigen Lösung ethoxylierter Fettalkohole ($C_{16}$ bis $C_{18}$, EO-Grad: 30) |
| 0,875 g | 3-Mercaptopropyltrimethoxysilan |
| 391 g | Wasser |

Zulauf II:

| | |
|---|---|
| 5,25 g | Ascorbinsäure |
| 0,175 g | Eisen(II)-Sulfat |
| 400 g | Wasser |

Zulauf III:

| | |
|---|---|
| 58,33 g | wäßrige Ausgangsdispersion AIa) aus Bsp. 1 |
| 13,13 g | einer 20 gew.-%igen wäßrigen Lösung der Dowfax 2A1 entsprechenden grenzflächenaktiven Substanz |
| 100 g | Wasser |

Die so erhältliche wäßrige Ausgangsdispersion IIb) wies eine Feststoffvolumenkonzentration von 45,6 Vol.-% (Feststoffgehalt = 50,3 Gew.-%) und nachfolgende Teilchengrößenverteilung auf:

15 Gew.-% Ausgangspolymerisat IIb ≤ 150 nm
58 Gew.-% Ausgangspolymerisat IIb ≤ 200 nm
88 Gew.-% Ausgangspolymerisat IIb ≤ 300 nm
100 Gew.-% Ausgangspolymerisat IIb ≤ 400 nm

AIIc) : Ein Gemisch der Zusammensetzung

| | |
|---|---|
| 22,63 g | Zulauf II |
| 42,00 g | Zulauf III |
| 300 g | Wasser |

wurde auf 85°C erhitzt und unter Aufrechterhaltung dieser Temperatur zeitgleich beginnend kontinuierlich mit der Restmenge des Zulauf III sowie mit Zulauf I versetzt, was sich zeitlich wie folgt gestaltete:

Zulauf I:

4 Gew.-% in 30 min,
dann 96 Gew.-% in 180 min

Zulauf III:
80 Gew.-% in 240 min
(Gew.-% auf die jeweilige Gesamtmenge bezogen)

Die Restmenge von Zulauf II wurde 30 min nach Beginn von Zulauf I kontinuierlich innerhalb von 180 min zugeführt.

Zulauf I:

| | |
|---|---|
| 1710 g | n-Butylacrylat |
| 250 g | Methylmethacrylat |
| 40 g | Methacrylsäure |
| 1 g | tert.-Dodecylmercaptan |
| 50 g | einer 20 gew.-%igen wäßrigen Lösung ethoxylierter Fettalkohole ($C_{16}$ bis $C_{18}$, EO-Grad: 18) |
| 100 g | einer 20 gew.-%igen wäßrigen Lösung der Dowfax 2A1 entsprechenden grenzflächenaktiven Substanz |
| 1 g | 3-Mercaptopropyltrimethoxysilan |
| 470 g | Wasser |

Zulauf II:

| | |
|---|---|
| 13,33 g | wäßrige Ausgangsdispersion AIa) aus Bsp. 1 |
| 5 g | einer 20 gew.-%igen wäßrigen Lösung der Dowfax 2A1 entsprechenden grenzflächenaktiven Substanz |
| 8 g | einer 25 gew.-%igen wäßrigen Ammoniaklösung |
| 200 g | Wasser |

Zulauf III:

| | |
|---|---|
| 10,00 g | Natriumperoxidisulft |

| | |
|---|---|
| 200 g | Wasser |

Die so erhältliche wäßrige Ausgangsdispersion IIc) wies eine Feststoffvolumenkonzentration von 56,1 Vol.-% (Feststoffgehalt = 61,1 Gew.-%) und nachfolgende Teilchengrößenverteilung auf:

4 Gew.-% Ausgangspolymerisat IIc) ≤ 200 nm
6 Gew.-% Ausgangspolymerisat IIc) ≤ 300 nm
60 Gew.-% Ausgangspolymerisat IIc) ≤ 400 nm
100 Gew.-% Ausgangspolymerisat IIc) ≤ 600 nm

Beispiel 3

Herstellung erfindungsgemäßer wäßriger Polymerisatenddispersionen

Ea):1000 g AIIa) aus Beispiel 2 wurden auf 85°C erwärmt und anschließend bei dieser Temperatur zeitgleich beginnend im Verlauf von 4 h kontinuierlich mit den Zuläufen I, II und III versetzt. Anschließend wurde die Reaktionsmischung noch 1 h bei 85°C gehalten.

Zulauf I:

| | |
|---|---|
| 1960 g | n-Butylacrylat |
| 40 g | Methacrylsäure |

Zulauf II:

| | |
|---|---|
| 25 g | wäßrige Ausgangsdispersion AIa) aus Bsp. 1 |
| 170 g | Wasser |
| 20 g | einer 10 gew.-%igen wäßrigen Ammoniaklösung |
| 150 g | einer 20 gew.-%igen wäßrigen Lösung der Dowfax 2A1 entsprechenden grenzflächenaktiven Substanz |

Zulauf III:

| | |
|---|---|
| 160 g | Wasser |
| 10 g | Natriumperoxidisulfat |

Eb):Wie Ea), jedoch enthielt die Vorlage lediglich 500 g AIIa) und in Zulauf II wurden die 170 g Wasser durch 320 g Wasser ersetzt.

Ec):Wie Ea), jedoch enthielt die Vorlage lediglich 250 g AIIa) und in Zulauf II wurden die 170 g Wasser durch 400 g Wasser ersetzt.

Ed):Wie Ea), jedoch enthielt die Vorlage 500 g Ea) aus Bsp. 3 anstelle 1000 g AIIa) und in Zulauf II wurden die 170 g Wasser durch 470 g Wasser ersetzt.

Ee):Wie Ed), jedoch enthielt die Vorlage Ed) anstelle Ea).

Ef):Wie Ee), jedoch enthielt die Vorlage Ee) anstelle Ed).

Eg):Wie Ef), jedoch enthielt die Vorlage Ef) anstelle Ee).

Die so erhaltenen Polymerisatenddispersionen sind in Tabelle 1 charakterisiert (FG = Feststoffgehalt in Gew.-%, FV = Feststoffvolumenkonzentration in Vol.-%, η = dynamische Viskosität bei 23°C und einem Geschwindigkeitsgefälle von 487 $s^{-1}$ gemäß DIN 53 019 in mPa·s). Die Teilchengrößenverteilung gibt jeweils den Gewichtsanteil (Gew.-%) des Endpolymerisats wieder, dessen Teilchendurchmesser ≤ X nm ist, wobei X ein Element aus der Menge {200, 300, 400, 600, 800, 1000, 1800} ist.

Tabelle 1

Tabelle 1

| | FG | FV | η | 200 | 300 | 400 | 600 | 800 | 1000 | 1800 |
|---|---|---|---|---|---|---|---|---|---|---|
| Ea) | 71,4 | 66,1 | 626 | 13 | 15 | 16 | 98 | 100 | | |
| Eb) | 71,0 | 65,7 | 330 | 15 | 17 | 17 | 95 | 100 | | |
| Ec) | 72,2 | 66,8 | 290 | 33 | 35 | 35 | 55 | 100 | | |

Tabelle 1 (fortgesetzt)

| | FG | FV | η | 200 | 300 | 400 | 600 | 800 | 1000 | 1800 |
|---|---|---|---|---|---|---|---|---|---|---|
| Ed) | 72,1 | 66,8 | 243 | 18 | 44 | 45 | 45 | 92 | 100 | |
| Ee) | 71,0 | 65,7 | 303 | 15 | 28 | 50 | 75 | 75 | 77 | 100 |
| Ef) | 72,3 | 66,9 | 291 | 18 | 35 | 48 | 70 | 88 | 90 | 100 |
| Eg) | 72,1 | 66,8 | 394 | 15 | 30 | 54 | 75 | 85 | 95 | 100 |

Eh): Ein Gemisch aus

Initiator enthaltende Ausgangsdispersion AIId):
- 500,8 g AIIb) (Bsp. 2)
- 17,5 g einer 30 gew.-%igen wäßrigen $H_2O_2$ Lösung
- 14,67 g Zulauf II
- 100 g Wasser

wurde auf 60°C erwärmt und anschließend auf einmal mit 10 Gew.-% des Zulauf III versetzt. Danach wurde zeit-gleich begonnen, die Restmengen der Zuläufe II, III sowie Zulauf I kontinuierlich zuzuführen (Zulauf I und Restmenge Zulauf II innerhalb von 3 h, Restmenge Zulauf III innerhalb von 4 h), wobei die Reaktionstemperatur auf 70°C angehoben und auf diesem Wert bis zum Ende von Zulauf III belassen wurde.

Zulauf I:

| | |
|---|---|
| 1645 g | n-Butylacrylat |
| 70 g | Ethylacrylat |
| 35 g | Methacrylsäure |
| 0,875 g | 3-Mercaptopropyltrimethoxysilan |
| 175 g | einer 20 gew.-%igen wäßrigen Lösung ethoxylierter Fettalkohole ($C_{16}$ bis $C_{18}$, EO-Grad: 30) |
| 70 g | einer 20 gew.-%igen wäßrigen Lösung der Dowfax 2A1 entsprechenden grenzflächenaktiven Substanz |
| 275 g | Wasser |

Zulauf II:

| | |
|---|---|
| 17,5 g | einer 20 gew.-%igen wäßrigen Lösung der Dowfax 2A1 entsprechenden grenzflächenaktiven Substanz |
| 29,17 g | AIa) (Bsp.1) |
| 100 g | Wasser |

Zulauf III:

| | |
|---|---|
| 5,25 g | Ascorbinsäure |
| 0,175 g | Eisen(II)-sulfat |
| 100 g | Wasser |

Ei): Wie Eh), jedoch enthielt die Vorlage 500,8 g Eh) (Bsp. 3) anstelle 500,8 g AIIb) und in Zulauf I wurden die 275 g Wasser durch 388 g Wasser ersetzt.

Ej): Wie Ei), jedoch enthielt die Vorlage Ei) anstelle Eh).

Ek): Wie Ej), jedoch enthielt die Vorlage Ej anstelle Ei).

El): Wie Eh), jedoch enthielt die Vorlage 250,25 g AIIb) anstelle von 500,8 g AIIb) und in Zulauf I wurden die 275 g Wasser durch 335 g Wasser ersetzt.

Em): Wie Eh), jedoch enthielt die Vorlage 500,8 g Eh) anstelle von 500,8 g AIIb), in Zulauf I wurden die 275 g Wasser durch 320 g Wasser, in Zulauf II die 100 g Wasser durch 200 g Wasser und in Zulauf III die 100 g Wasser durch 200 g Wasser ersetzt.

En): Wie Eh), jedoch waren die Zuläufe I, II, III und die Vorlage wie folgt zusammengesetzt:

Vorlage: 256,94 g Em) (Bsp. 3)
9 g einer 30 gew.-%igen $H_2O_2$ Lösung
12,4 g Zulauf II
50 g Wasser

(Initiator enthaltende Ausgangsdispersion AIIe)

Zulauf I:

| | |
|---|---|
| 666 g | n-Butylacrilat |
| 36 g | Ethylacrylat |
| 18 g | Methacrylsäure |
| 180 g | Vinylacetat |
| 90 g | einer 20 gew.-%igen wäßrigen Lösung ethoxylierter Fettalkohole ($C_{16}$ bis $C_{18}$, EO-Grad: 30) |
| 36 g | einer 20 gew.-%igen wäßrigen Lösung der Dowfax 2A1 entsprechenden grenzflächenaktiven Substanz |
| 172 g | Wasser |

Zulauf II:

| | |
|---|---|
| 9,0 g | einer 20 gew.-%igen wäßrigen Lösung der Dowfax 2A1 entsprechenden grenzflächenaktiven Substanz |
| 15,0 g | AIa) (Bsp. 1) |
| 100 g | Wasser |

Zulauf III:

| | |
|---|---|
| 2,7 g | Ascorbinsäure |
| 0,09 g | Eissen(II)-sulfat |
| 100 g | Wasser |

Eo):Wie En), jedoch wurden in der Vorlage die 256,94 g Em) durch die entsprechende Menge En) ersetzt.

Ep):Wie En), jedoch wurden in der Vorlage die 256,94 g Em) durch die entsprechende Menge Eo) ersetzt. Zusätzlich wurde in Zulauf I das Vinylacetat durch die entsprechende Menge Styrol ersetzt und die Menge Ascorbinsäure in Zulauf III auf 5,4 g erhöht.

Eq):Wie Ep), jedoch wurden in der Vorlage die 256,94 g Eo) durch die entsprechende Menge Ep) ersetzt.

Er):Wie Eq), jedoch wurden in der Vorlage die 256,94 g Ep) durch die entsprechende Menge Eq) ersetzt.

Die so erhaltenen wäßrigen Polymerisatenddispersionen sind in Tabelle 2 gemäß Tabelle 1 charakterisiert.

Tabelle 2

| | FG | FV | η | 200 | 300 | 400 | 600 | 800 | 1000 | 1400 |
|---|---|---|---|---|---|---|---|---|---|---|
| Eh) | 64,9 | 60,1 | 240 | 10 | 30 | 78 | 100 | | | |
| Ei) | 65,2 | 60,4 | 300 | 34 | 48 | 56 | 92 | 100 | | |
| Ej) | 64,8 | 60,0 | 200 | 22 | 46 | 73 | 83 | 95 | 100 | |
| Ek) | 64,6 | 59,8 | 190 | 25 | 52 | 64 | 85 | 92 | 96 | 100 |
| El) | 64,7 | 59,9 | 150 | 16 | 28 | 70 | 100 | | | |
| Em) | 62,4 | 57,8 | 83 | 16 | 50 | 65 | 83 | 83 | 95 | 100 |
| En) | 61,1 | 56,6 | 65 | 23 | 47 | 57 | 85 | 94 | 94 | 100 |
| Eo) | 60,1 | 54,7 | 35 | 28 | 46 | 65 | 78 | 92 | 98 | 100 |
| Ep) | 60,1 | 55,7 | 160 | 43 | 66 | 72 | 88 | 95 | 97 | 100 |

Fortsetzung Tabelle 2

| | FG | FV | η | 200 | 300 | 400 | 600 | 800 | 1000 | 1400 |
|---|---|---|---|---|---|---|---|---|---|---|
| Eq) | 60,6 | 55,6 | 87 | 28 | 64 | 82 | 92 | 98 | 100 | |
| Er) | 62,0 | 56,9 | 120 | 28 | 56 | 78 | 96 | 98 | 100 | |

Es): Ein Gemisch bestehend aus

83,33 g Allc (Bsp. 2)
2,00 g Natriumperoxidisulfat
200 g Wasser

wurde auf 85°C erwärmt und unter Aufrechterhaltung dieser Temperatur innerhalb von 30 min kontinuierlich mit 4 Gew.-% Zulauf I versetzt und so eine Ausgangsdispersion IIf) erzeugt. Zu dieser wurden mit nahtlosem Übergang zeitgleich beginnend innerhalb von 320 min die Restmenge des Zulauf I und die Gesamtmenge des Zulauf II kontinuierlich zugeführt. Abschließend wurde noch 1 h bei 85°C nachpolymerisiert.

Zulauf I:

1710 g n-Butylacrylat
250 g Methylmethacrylat
40 g Methacrylsäure
80 g einer 20 gew.-%igen wäßrigen Lösung der Dowfax 2A1 entsprechenden grenzflächenaktiven Substanz
50 g einer 20 gew.-%igen wäßrigen Lösung ethoxylierter Fettalkohole ($C_{16}$ bis $C_{18}$, EO-Grad: 18)
1 g tert.-Dodecylmercaptan
1 g 3-Mercaptopropyltrimethoxysilan
307 g Wasser

Zulauf II:

8 g einer 25 gew.-%igen wäßrigen Ammoniaklösung
13,33 g Ala) aus Bsp. 1
20,00 g einer 25 gew.-%igen wäßrigen Lösung der Dowfax 2A1 entsprechenden grenzflächenaktiven Substanz
8,0 g Natriumperoxidisulfat
100 g Wasser

Et):Wie Es), die 83,33 g AIIc) in der Vorlage wurden jedoch durch 250 g Es) (Bsp. 3) ersetzt und im Zulauf I wurden anstelle der 307 g Wasser 318 g Wasser verwendet.

Eu):Wie Es), anstelle von 83,33 g AIIc) wurden jedoch in der Vorlage 166,7 g AIIc) eingesetzt und in Zulauf I wurden anstelle der 307 g Wasser 292 g Wasser verwendet.

Ev):Wie Es), anstelle von 83,33 g AIIc) waren in der Vorlage jedoch 250 g Eu) enthalten und in Zulauf I wurden anstelle 307 g Wasser 318 g Wasser verwendet.

Ew) : Wie Es), die 83,33 g AIIc) in der Vorlage wurden jedoch durch 250 g AIIc) ersetzt und anstelle von 307 g Wasser wurden in Zulauf I 277 g Wasser angewendet.

Ex):Wie Es), die 83,33 g AIIc) in der Vorlage waren jedoch durch 250 g Ew) ersetzt und in Zulauf I wurden die 307 g Wasser durch 318 g Wasser ersetzt.

Die so erhaltenen wäßrigen Polymerisatenddispersionen sind in Tabelle 3 gemäß Tabelle 1 charakterisiert.

Tabelle 3

| | FG | FV | η | 200 | 300 | 400 | 600 | 800 | 1000 | 1500 | 2000 |
|---|---|---|---|---|---|---|---|---|---|---|---|
| Es) | 72,4 | 66,5 | 240 | 3 | 5 | 40 | 52 | 57 | 61 | 100 | |
| Et) | 72,2 | 66,3 | 220 | 3 | 10 | 46 | 52 | 58 | 83 | 87 | 100 |
| Eu) | 72,5 | 66,6 | 360 | 2 | 25 | 40 | 44 | 47 | 88 | 100 | |

Tabelle 3 (fortgesetzt)

| | FG | FV | η | 200 | 300 | 400 | 600 | 800 | 1000 | 1500 | 2000 |
|---|---|---|---|---|---|---|---|---|---|---|---|
| Ev) | 72,6 | 66,7 | 270 | 3 | 12 | 38 | 40 | 77 | 80 | 82 | 100 |
| Ew) | 72,4 | 66,5 | 420 | 4 | 36 | 38 | 40 | 58 | 97 | 100 | |
| Ex) | 72,8 | 66,9 | 190 | 4 | 24 | 28 | 66 | 70 | 75 | 100 | |

## Patentansprüche

**1.** Wäßrige Polymerisatenddispersion, die eine Feststoffvolumenkonzentration von wenigstens 50 Vol.-% und die Teilchengrößenverteilung

5 bis 30 Gew.-% des Polymerisats ≤ 200 nm
20 bis 55 Gew.-% des Polymerisats ≤ 300 nm
45 bis 70 Gew.-% des Polymerisats ≤ 400 nm
60 bis 85 Gew.-% des Polymerisats ≤ 600 nm
75 bis 95 Gew.-% des Polymerisats ≤ 800 nm
100 Gew.-% des Polymerisats ≤ 2000 nm

aufweist, dadurch erhältlich, daß man wenigstens ein radikalisch polymerisierbares Monomeres unter Zusatz wenigstens einer wäßrigen Ausgangsdispersion I eines Ausgangspolymerisats I und unter Zusatz wenigstens einer wäßrigen Ausgangsdispersion II eines Ausgangspolymerisats II in einem Polymerisationsgefäß nach dem Verfahren der radikalischen wäßrigen Emulsionspolymerisation in Gegenwart grenzflächenaktiver Substanzen und radikalischer Polymerisationsinitiatoren mit der Maßgabe polymerisiert, daß

a) das Ausgangspolymerisat I in der wenigstens einen wäßrigen Ausgangsdispersion I in Form dispers verteilter Ausgangspolymerisatteilchen I vorliegt, deren von Null verschiedener gewichtsmittlerer Teilchendurchmesser kleiner oder gleich 50 nm ist,

b) die Masse des wenigstens einen zugesetzten Ausgangspolymerisats I, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, 0,2 bis 0,7 % beträgt,

c) das Ausgangspolymerisat II in der wenigstens einen wäßrigen Ausgangsdispersion II in Form dispers verteilter Ausgangspolymerisatteilchen II vorliegt, von deren Gesamtmasse höchsten 60 % einen von Null verschiedenen Teilchendurchmesser ≤ 200 nm und wenigstens 40 % einen Teilchendurchmesser > 200 nm aufweisen,

d) die Masse des wenigstens einen zugesetzten Ausgangspolymerisats II, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, 2 bis 20 % beträgt,

e) von der Gesamtmenge der wenigstens einen zuzusetzenden wäßrigen Ausgangsdispersion I vor Beginn der radikalischen wäßrigen Emulsionspolymerisation nichts ins Polymerisationsgefäß vorgelegt wird,

f) die Gesamtmenge der wenigstens einen zuzusetzenden wäßrigen Ausgangsdispersion II vor Beginn der radikalischen Emulsionspolymerisation ins Polymerisationsgefäß vorgelegt wird,

g) von der Gesamtmenge des wenigstens einen zu polymerisierenden Monomeren vor Beginn der radikalischen wäßrigen Emulsionspolymerisation nichts ins Polymerisationsgefäß vorgelegt wird,

h) die Gesamtmenge des wenigstens einen zu polymerisierenden Monomeren ab Beginn der radikalischen wäßrigen Emulsionspolymerisaticn dem Polymerisationsgefäß so zugeführt wird, daß zu jedem Zeitpunkt dieser Zufuhr der Polymerisationsumsatz der bereits zuvor dem Polymerisationsgefäß insgesamt zugeführten Monomeren wenigstens 80 mol-% beträgt,

i) zu jedem Zeitpunkt nach Beginn der radikalischen wäßrigen Emulsionspolymerisation das Verhältnis V der Molzahl der dem Polymerisationsgefäß bereits zuvor in Form der wenigstens einen wäßrigen Ausgangsdispersion I zugeführten Teilchen an Ausgangspolymerisat I zu der Molzahl der dem Polymerisationsgefäß bereits zuvor zugeführten Menge des wenigstens einen radikalisch zu polymerisierenden Monomeren, normiert auf das Verhältnis der Molzahl der insgesamt in Form der wenigstens einen wäßrigen Ausgangsdispersion I zuzuführenden Ausgangspolymerisatteilchen zu der Molzahl der insgesamt radikalisch zu polymerisierenden Monomeren, im Bereich von > 0 bis 10 liegt,

j) nach Beendigung der Zufuhr der insgesamt zuzuführenden Menge der wenigstens einen wäßrigen Ausgangsdispersion I noch höchstens 20 mol-% der Gesamtmenge des wenigstens einen radikalisch zu polymerisierenden Monomeren dem Polymerisationsgefäß zugeführt werden,

k) die wenigstens eine zuzusetzende wäßrige Ausgangsdispersion I, bezogen auf ihren Gehalt an Ausgangspolymerisat I, wenigstens 10 bis 50 Gew.-% an grenzflächenaktiven Substanzen enthält,

l) die wenigstens eine zuzusetzende wäßrige Ausgangsdispersion II, bezogen auf ihren Gehalt an Ausgangspolymerisat II, wenigstens 1 bis 5 Gew.-% an grenzflächenaktiven Substanzen enthält,

m) die wäßrige Polymerisatenddispersion, bezogen auf die Gesamtmasse, gebildet aus der Masse des wenigstens einen radikalisch polymerisierbaren Monomeren und der in Form der wäßrigen Ausgangsdispersionen I, II zuzusetzenden Massen an Ausgangspolymerisaten I, II, 1 bis 5 Gew.-% grenzflächenaktive Substanzen enthält,

n) die zu jedem Zeitpunkt ab Beginn der radikalischen wäßrigen Emulsionspolymerisation im Polymerisationsgefäß enthaltene Menge an grenzflächenaktiven Substanzen, abzüglich der als in Form der unter k), l) genannten Mindestmengen ins Polymerisationsgefäß eingebrachten grenzflächenaktiven Substanzen, auf die dem Polymerisationsgefäß zuvor bereits zugeführten Monomeren bezogen, weniger als 5 Gew.-% beträgt und

o) die insgesamt eingesetzte Menge an radikalischen Polymerisationsinitiatoren, bezogen auf die Gesamtmenge des wenigstens einen radikalisch zu polymerisierenden Monomeren, 0,1 bis 5 Gew.-% beträgt und im Verlauf der radikalischen wäßrigen Emulsionspolymerisation dem Polymerisationsgefäß so zugegeben wird, daß sich die radikalische wäßrige Emulsionspolymerisation bis zu einem Mindestpolymerisationsumsatz der Gesamtmenge des wenigstens einen zu polymerisierenden Monomeren von wenigstens 90 mol-% fortsetzt.

**2.** Wäßrige Polymerisatenddispersion nach Anspruch 1, dadurch erhältlich, daß als wenigstens eine wäßrige Ausgangsdispersion II eine wäßrige Polymerisatenddispersion nach Anspruch 1 verwendet wird.

**3.** Wäßrige Polymerisatenddispersion nach den Ansprüchen 1 oder 2, dadurch erhältlich, daß man als wenigstens eine wäßrige Ausgangsdispersion II eine wäßrige Polymerisatenddispersion nach Anspruch 1 verwendet, wenigstens einen Teil der dabei erhältlichen wäßrigen Polymerisatenddispersion in einem darauffolgenden Zyklus seinerseits zum Erhalt einer nächsten Polymerisatenddispersion nach Anspruch 1 oder 2 als wenigstens eine wäßrige Ausgangsdispersion II verwendet und in der so aufgezeigten zyklischen Verfahrensweise gegebenenfalls weiterverfährt.

**4.** Wäßrige Polymerisatenddispersion nach Anspruch 1, dadurch erhältlich, daß man als wenigstens eine wäßrige Ausgangsdispersion II eine solche verwendet, die nachfolgende Teilchengrößenverteilung aufweist:

5 bis 25 Gew.-% des Ausgangspolymerisats II $\leq$ 200 nm
15 bis 40 Gew.-% des Ausgangspolymerisats II $\leq$ 400 nm
35 bis 75 Gew.-% des Ausgangspolymerisats II $\leq$ 600 nm
45 bis 90 Gew.-% des Ausgangspolymerisats II $\leq$ 800 nm
100 Gew.-% des Ausgangspolymerisats II $\leq$ 1600 nm.

**5.** Wäßrige Polymerisatenddispersion nach den Ansprüchen 1 bis 4, dadurch erhältlich, daß das Ausgangspolymerisat I in der wenigstens einen wäßrigen Ausgangsdispersion I in Form dispers verteilter Ausgangspolymerisatteilchen vorliegt, deren gewichtsmittlerer Teilchendurchmesser im Bereich von 25 bis 45 nm liegt.

**6.** Wäßrige Polymerisatenddispersion nach den Ansprüchen 1 bis 5, die wenigstens eine grenzflächenaktive Substanz der allgemeinen Formel I

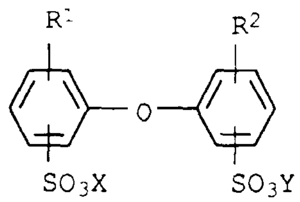

(I),

in der $R^1$ und $R^2$ Wasserstoff oder $C_4$- bis $C_{24}$-Alkyl bedeuten und nicht gleichzeitig Wasserstoff sind und X und Y Alkalimetallionen und/oder Ammoniumionen sein können, enthält.

**7.** Wäßrige Polymerisatenddispersion nach den Ansprüchen 1 bis 6, deren Feststoffvolumenkonzentration ≥ 65 Vol.-% beträgt.

**8.** Verfahren zur Herstellung einer wäßrigen Polymerisatenddispersion, die eine Festvolumenkonzentration von wenigstens 50 Vol.-% aufweist, dadurch gekennzeichnet, daß man wenigstens ein radikalisch polymerisierbares Monomeres unter Zusatz wenigstens einer wäßrigen Ausgangsdispersion I eines Ausgangspolymerisats I und unter Zusatz wenigstens einer wäßrigen Ausgangsdispersion II eines Ausgangspolymerisats II in einem Polymerisationsgefäß nach dem Verfahren der radikalischen wäßrigen Emulsionspolymerisation in Gegenwart grenzflächenaktiver Substanzen und radikalischer Polymerisationsinitiatoren mit der Maßgabe polymerisiert, daß

a) das Ausgangspolymerisat I in der wenigstens einen wäßrigen Ausgangsdispersion I in Form dispers verteilter Ausgangspolymerisatteilchen I vorliegt, deren von Null verschiedener gewichtsmittlerer Teilchendurchmesser kleiner oder gleich 50 nm ist,

b) die Masse des wenigstens einen zugesetzten Ausgangspolymerisats I, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, 0,2 bis 0,7 % beträgt,

c) das Ausgangspolymerisat II in der wenigstens einen wäßrigen Ausgangsdispersion II in Form dispers verteilter Ausgangspolymerisatteilchen II vorliegt, von deren Gesamtmasse höchsten 60 % einen von Null verschiedenen Teilchendurchmesser ≤ 200 nm und wenigstens 40 % einen Teilchendurchmesser > 200 nm aufweisen,

d) die Masse des wenigstens einen zugesetzten Ausgangspolymerisats II, bezogen auf die Gesamtmasse, gebildet aus der Masse des wenigstens einen radikalisch polymerisierbaren Monomeren und der in Form wäßriger Ausgangsdispersionen I, II zugesetzten Masse an Ausgangspolymerisaten I, II, 2 bis 20 % beträgt,

e) von der Gesamtmenge der wenigstens einen zuzusetzenden wäßrigen Ausgangsdispersion I vor Beginn der radikalischen wäßrigen Emulsionspolymerisation nichts ins Polymerisationsgefäß vorgelegt wird,

f) die Gesamtmenge der wenigstens einen zuzusetzenden wäßrigen Ausgangsdispersion II vor Beginn der radikalischen Emulsionspolymerisation ins Polymerisationsgefäß vorgelegt wird,

g) von der Gesamtmenge des wenigstens einen zu polymerisierenden Monomeren vor Beginn der radikalischen wäßrigen Emulsionspolymerisation nichts ins Polymerisationsgefäß vorgelegt wird,

h) die Gesamtmenge des wenigstens einen zu polymerisierenden Monomeren ab Beginn der radikalischen wäßrigen Emulsionspolymerisation dem Polymerisationsgefäß so zugeführt wird, daß zu jedem Zeitpunkt dieser Zufuhr der Polymerisationsumsatz der bereits zuvor dem Polymerisationsgefäß insgesamt zugeführten Monomeren wenigstens 80 mol-% beträgt,

i) zu jedem Zeitpunkt nach Beginn der radikalischen wäßrigen Emulsionspolymerisation das Verhältnis V der Molzahl der dem Polymerisationsgefäß bereits zuvor in Form der wenigstens einen wäßrigen Ausgangsdispersion I zugeführten Teilchen an Ausgangspolymerisat I zu der Molzahl der dem Polymerisationsgefäß bereits zuvor zugeführten Menge des wenigstens einen radikalisch zu polymerisierenden Monomeren, normiert auf das Verhältnis der Molzahl der insgesamt in Form der wenigstens einen wäßrigen Ausgangsdispersion I zuzuführenden Ausgangspolymerisatteilchen zu der Molzahl der insgesamt radikalisch zu polymerisierenden

Monomeren, im Bereich von > 0 bis 10 liegt,

j) nach Beendigung der Zufuhr der insgesamt zuzuführenden Menge der wenigstens einen wäßrigen Ausgangsdispersion I noch höchstens 20 mol-% der Gesamtmenge des wenigstens einen radikalisch zu polymerisierenden Monomeren dem Polymerisationsgefäß zugeführt werden,

k) die wenigstens eine zuzusetzende wäßrige Ausgangsdispersion I, bezogen auf ihren Gehalt an Ausgangspolymerisat I, wenigstens 10 bis 50 Gew.-% an grenzflächenaktiven Substanzen enthält,

l) die wenigstens eine zuzusetzende wäßrige Ausgangsdispersion II, bezogen auf ihren Gehalt an Ausgangspolymerisat II, wenigstens 1 bis 5 Gew.-% an grenzflächenaktiven Substanzen enthält,

m) die wäßrige Polymerisatenddispersion, bezogen auf die Gesamtmasse, gebildet aus der Masse des wenigstens einen radikalisch polymerisierbaren Monomeren und der in Form der wäßrigen Ausgangsdispersionen I, II zuzusetzenden Massen an Ausgangspolymerisaten I, II, 1 bis 5 Gew.-% grenzflächenaktive Substanzen enthält,

n) die zu jedem Zeitpunkt ab Beginn der radikalischen wäßrigen Emulsionspolymerisation im Polymerisationsgefäß enthaltene Menge an grenzflächenaktiven Substanzen, abzüglich der als in Form der unter k), l) genannten Mindestmengen ins Polymerisationsgefäß eingebrachten grenzflächenaktiven Substanzen, auf die dem Polymerisationsgefäß zuvor bereits zugeführten Monomeren bezogen, weniger als 5 Gew.-% beträgt und

o) die insgesamt eingesetzte Menge an radikalischen Polymerisationsinitiatoren, bezogen auf die Gesamtmenge des wenigstens einen radikalisch zu polymerisierenden Monomeren, 0,1 bis 5 Gew.-% beträgt und im Verlauf der radikalischen wäßrigen Emulsionspolymerisation dem Polymerisationsgefäß so zugegeben wird, daß sich die radikalische wäßrige Emulsionspolymerisation bis zu einem Mindestpolymerisationsumsatz der Gesamtmenge des wenigstens einen zu polymerisierenden Monomeren von wenigstens 90 mol-% fortsetzt.

**9.** Verwendung einer wäßrigen Polymerisatenddispersion gemäß den Ansprüchen 1 bis 7 als Bindemittel sowie als Masse zur Herstellung von Beschichtungen und Verklebungen.

**Claims**

**1.** A final aqueous polymer dispersion having a solids volume concentration of at least 50 % by volume and the particle size distribution

5 - 30 % by weight of the polymer ≤ 200 nm
20 - 55 % by weight of the polymer ≤ 300 nm
45 - 70 % by weight of the polymer ≤ 400 nm
60 - 85 % by weight of the polymer ≤ 600 nm
75 - 95 % by weight of the polymer ≤ 800 nm
100 % by weight of the polymer ≤ 2000 nm,

obtainable by polymerizing at least one radical polymerizable monomer with the addition of at least one aqueous starting dispersion I of a starting polymer I and with the addition of at least one aqueous starting dispersion II of a starting polymer II in a polymerization vessel by the method of free radical aqueous emulsion polymerization in the presence of surface active substances and free radical polymerization initiators with the proviso that

a) the starting polymer I is present in the at least one aqueous starting dispersion I in the form of dispersed starting polymer particles I whose non-zero weight average particle diameter is equal to or less than 50 nm,
b) the mass of the at least one starting polymer I added relative to the total mass formed of the mass of the at least one radical polymerizable monomer and of the mass of starting polymers I, II added in the form of aqueous starting dispersions I, II is from 0.2 to 0.7 %,
c) the starting polymer II is present in the at least one aqueous starting dispersion II in the form of dispersed starting polymer particles II of whose total mass not more than 60 % have a non-zero particle diameter ≤ 200 nm and at least 40 % have a particle diameter > 200 nm,
d) the mass of the at least one starting polymer II added relative to the total mass formed of the mass of the

at least one radical polymerizable monomer and of the mass of starting polymers I, II added in the form of aqueous starting dispersions I, II is from 2 to 20 %,

e) of the total amount of the at least one aqueous starting dispersion I to be added the amount introduced into the polymerization vessel as initial charge prior to the start of the free radical aqueous emulsion polymerization is nil,

f) the total amount of the at least one aqueous starting dispersion II to be added is introduced into the polymerization vessel as initial charge prior to the start of the free radical emulsion polymerization,

g) of the total amount of the at least one monomer to be polymerized the proportion introduced into the polymerization vessel as initial charge prior to the start of the free radical aqueous emulsion polymerization is nil,

h) the total amount of the at least one monomer to be polymerized is added to the polymerization vessel from the start of the free radical aqueous emulsion polymerization in such a way that at any time of this addition the polymerization conversion of the total monomers alreay added previously to the polymerization vessel is at least 80 mol %,

i) at any time after the start of the free radical aqueous emulsion polymerization the ratio V of the number of moles of the particles of starting polymer I already added previously to the polymerization vessel in the form of the at least one aqueous starting dispersion I to the number of moles of the amount already added previously to the polymerization vessel of the at least one monomer to be radical polymerized, standardized for the ratio of the number of moles of the total starting polymer particles to be added in the form of the at least one aqueous starting dispersion I to the number of moles of the total amount of monomers to be radical polymerized, is within the range from > 0 to 10,

j) on completion of the addition of the total amount to be added of the at least one aqueous starting dispersion I additionally at most 20 mol % of the total amount of the at least one monomer to be radical polymerized is added to the polymerization vessel,

k) the at least one aqueous starting dispersion I to be added contains at least 10 - 50 % by weight, based on its starting polymer I content, of surface active substances,

l) the at least one aqueous starting dispersion II to be added contains at least 1 - 5 % by weight, based on its starting polymer II content, of surface active substances,

m) the final aqueous polymer dispersion contains from 1 to 5 % by weight of the surface active substances, based on the total mass formed of the mass of the at least one radical polymerizable monomer and of the masses of starting polymers I, II to be added in the form of aqueous starting dispersions I, II,

n) the amount of surface active substances contained in the polymerization vessel at any time from the start of the free radical aqueous emulsion polymerization minus the minimum amounts mentioned under k), l) of surface active substances introduced into the polymerization vessel is less than 5 % by weight, based on the monomers already added previously to the polymerization vessel, and

o) the total amount used of free radical polymerization initiators is from 0.1 to 5 % by weight, based on the total amount of the at least one monomer to be radical polymerized, and is added to the polymerization vessel in the course of the free radical aqueous emulsion polymerization in such a way that the free radical aqueous emulsion polymerization continues to a minimum polymerization conversion of the total amount of the at least one monomer to be polymerized of at least 90 mol %.

**2.** A final aqueous polymer dispersion as claimed in claim 1, obtainable when the at least one aqueous starting dispersion II used is a final aqueous polymer dispersion as claimed in claim 1.

**3.** A final aqueous polymer dispersion as claimed in claim 1 or 2, obtainable when the at least one aqueous starting dispersion II used is a final aqueous polymer dispersion as claimed in claim 1, at least part of the final aqueous polymer dispersion obtainable therein is in turn used as at least one aqueous starting dispersion II in a subsequent cycle to obtain a subsequent final polymer dispersion as claimed in claim 1 or 2, and the cyclical method thus delineated is continued as desired.

**4.** A final aqueous polymer dispersion as claimed in claim 1, obtainable when the at least one aqueous starting dispersion II used has the following particle size distribution:

5 - 25 % by weight of starting polymer II $\leq$ 200 nm
15 - 40 % by weight of starting polymer II $\leq$ 400 nm
35 - 75 % by weight of starting polymer II $\leq$ 600 nm
45 - 90 % by weight of starting polymer II $\leq$ 800 nm
100 % by weight of starting polymer II $\leq$ 1600 nm.

**5.** A final aqueous polymer dispersion as claimed in any of claims 1 to 4, obtainable when the starting polymer I is present in the at least one aqueous starting dispersion I in the form of dispersed starting polymer particles whose weight average particle diameter is within the range from 25 to 45 nm.

**6.** A final aqueous polymer dispersion as claimed in any of claims 1 to 5 comprising at least one surface active substance of the general formula I

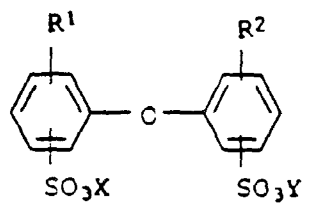

(I)

where $R^1$ and $R^2$ are each hydrogen or $C_4$-$C_{24}$-alkyl but are not both hydrogen, and X and Y are each an alkali metal or ammonium ion.

**7.** A final aqueous polymer dispersion as claimed in any of claims 1 to 6 whose solids volume concentration is ≥ 65 % by volume.

**8.** A process for preparing a final aqueous polymer dispersion having a solids volume concentration of at least 50 % by volume, which comprises polymerizing at least one radical polymerizable monomer with the addition of at least one aqueous starting dispersion I of a starting polymer I and with the addition of at least one aqueous starting dispersion II of a starting polymer II in a polymerization vessel by the method of free radical aqueous emulsion polymerization in the presence of surface active substances and free radical polymerization initiators with the proviso that

a) the starting polymer I is present in the at least one aqueous starting dispersion I in the form of dispersed starting polymer particles I whose non-zero weight average particle diameter is equal to or less than 50 nm,
b) the mass of the at least one starting polymer I added relative to the total mass formed of the mass of the at least one radical polymerizable monomer and of the mass of starting polymers I, II added in the form of aqueous starting dispersions I, II is from 0.2 to 0.7 %,
c) the starting polymer II is present in the at least one aqueous starting dispersion II in the form of dispersed starting polymer particles II of whose total mass not more than 60 % have a non-zero particle diameter ≤ 200 nm and at least 40 % have a particle diameter > 200 nm,
d) the mass of the at least one starting polymer II added relative to the total mass formed of the mass of the at least one radical polymerizable monomer and of the mass of starting polymers I, II added in the form of aqueous starting dispersions I, II is from 2 to 20 %,
e) of the total amount of the at least one aqueous starting dispersion I to be added the amount introduced into the polymerization vessel as initial charge prior to the start of the free radical aqueous emulsion polymerization is nil,
f) the total amount of the at least one aqueous starting dispersion II to be added is introduced into the polymerization vessel as initial charge prior to the start of the free radical emulsion polymerization,
g) of the total amount of the at least one monomer to be polymerized the proportion introduced into the polymerization vessel as initial charge prior to the start of the free radical aqueous emulsion polymerization is nil,
h) the total amount of the at least one monomer to be polymerized is added to the polymerization vessel from the start of the free radical aqueous emulsion polymerization in such a way that at any time of this addition the polymerization conversion of the total monomers alreay added previously to the polymerization vessel is at least 80 mol %,
i) at any time after the start of the free radical aqueous emulsion polymerization the ratio V of the number of moles of the particles of starting polymer I already added previously to the polymerization vessel in the form of the at least one aqueous starting dispersion I to the number of moles of the amount already added previously to the polymerization vessel of the at least one monomer to be radical polymerized, standardized for the ratio of the number of moles of the total starting polymer particles to be added in the form of the at least one aqueous starting dispersion I to the number of moles of the total amount of monomers to be radical polymerized, is within the range from > 0 to 10,
j) on completion of the addition of the total amount to be added of the at least one aqueous starting dispersion I additionally at most 20 mol % of the total amount of the at least one monomer to be radical polymerized is

added to the polymerization vessel,
k) the at least one aqueous starting dispersion I to be added contains at least 10 - 50 % by weight, based on its starting polymer I content, of surface active substances,
l) the at least one aqueous starting dispersion II to be added contains at least 1 - 5 % by weight, based on its starting polymer II content, of surface active substances,
m) the final aqueous polymer dispersion contains from 1 to 5 % by weight of the surface active substances, based on the total mass formed of the mass of the at least one radical polymerizable monomer and of the masses of starting polymers I, II to be added in the form of aqueous starting dispersions I, II,
n) the amount of surface active substances contained in the polymerization vessel at any time from the start of the free radical aqueous emulsion polymerization minus the minimum amounts mentioned under k), l) of surface active substances introduced into the polymerization vessel is less than 5 % by weight, based on the monomers already added previously to the polymerization vessel, and
o) the total amount used of free radical polymerization initiators is from 0.1 to 5 % by weight, based on the total amount of the at least one monomer to be radical polymerized, and is added to the polymerization vessel in the course of the free radical aqueous emulsion polymerization in such a way that the free radical aqueous emulsion polymerization continues to a minimum polymerization conversion of the total amount of the at least one monomer to be polymerized of at least 90 mol %.

**9.** The use of a final aqueous polymer dispersion as claimed in any of claims 1 to 7 as binder and also as material for preparing coatings and adhesive joints.

**Revendications**

**1.** Dispersion aqueuse finale de polymère qui présente une concentration en volume de solides d'au moins 50% en volume et qui présente la distribution granulométrique :

5 à 30% en poids du polymère ≤ 200 nm
20 à 55% en poids du polymère ≤ 300 nm
45 à 70% en poids du polymère ≤ 400 nm
60 à 85% en poids du polymère ≤ 600 nm
75 à 95% en poids du polymère ≤ 800 nm
100% en poids du polymère ≤ 2000 nm

pouvant être obtenue en ce que l'on polymérise dans un récipient de polymérisation, par le procédé de polymérisation radicalaire en émulsion aqueuse, en présence de substances tensioactives et d'amorceurs de polymérisation radicalaire, au moins un monomère polymérisable par voie radicalaire, avec addition d'au moins une dispersion aqueuse I de départ d'un polymère de départ I et addition d'au moins une dispersion aqueuse de départ II d'un polymère de départ II, avec les conditions suivantes :

a) le polymère de départ I est présent dans la ou les dispersions aqueuses de départ I sous la forme de particules dispersées du polymère de départ I dont le diamètre moyen en poids, différent de zéro, des particules, est inférieur ou égal à 50 nm,
b) la masse du ou des polymères de départ I ajoutés, rapportée à la masse totale formée de la masse du ou des monomères polymérisables par voie radicalaire et de la masse des polymères de départ I, II ajoutés sous forme de dispersions aqueuses de départ I, II, vaut 0,2 à 0,7%,
c) le polymère de départ II est présent dans la ou dans les dispersions aqueuses de départ II sous forme de particules de polymère de départ II dispersées, dont au plus 60% de la masse totale présente un diamètre de particules différent de zéro et ≤ 200 nm et dont au moins 40% de la masse totale présente un diamètre de particules > 200 nm,
d) la masse du ou des polymères de départ II, rapportée à la masse totale formée de la masse du ou des monomères polymérisables par voie radicalaire et de la masse des polymères de départ I, II ajoutés sous la forme de dispersions aqueuses de départ I, II, vaut de 2 à 20%,
e) de la masse totale de la dispersion aqueuse de départ I qu'il faut au moins ajouter, rien n'est présent dans le récipient de polymérisation avant le début de la polymérisation radicalaire en émulsion aqueuse,
f) la masse totale de la ou des dispersions aqueuses de départ II à ajouter est placée dans le récipient de polymérisation avant le début de la polymérisation radicalaire en émulsion,
g) de la masse totale du ou des monomères à polymériser, rien n'est placé dans le récipient de polymérisation

avant le début de la polymérisation radicalaire en émulsion aqueuse,

h) la masse totale du ou des monomères à polymériser est apportée dans le récipient de polymérisation à partir du début de la polymérisation radicalaire en émulsion aqueuse de telle sorte qu'à chaque instant de cet apport, le rendement de polymérisation de la totalité des monomères déjà apportés précédemment dans le récipient de polymérisation est d'au moins 80% molaires,

i) à chaque instant après le début de la polymérisation radicalaire en émulsion aqueuse, le rapport V du nombre de moles des particules du polymère de départ I déjà apportées précédemment dans le récipient de polymérisation sous la forme d'une ou de dispersions aqueuses de départ I, au nombre de moles de la quantité, déjà apportée précédemment dans le récipient de polymérisation, du ou des monomères à polymériser par voie radicalaire, rapporté au rapport du nombre de moles de la totalité des particules de polymère de départ à apporter sous la forme d'une ou de dispersions aqueuses de départ I au nombre de moles de la totalité des monomères à polymériser par voie radicalaire, est situé dans la plage de > 0 à 10,

j) au plus encore 20% molaires de la quantité totale du ou des monomères à polymériser par voie radicalaire sont apportés dans le récipient de polymérisation avant que soit terminé l'apport de la quantité totale à apporter de la ou des dispersions aqueuses de départ I,

k) la ou les dispersions aqueuses de départ I à ajouter contiennent au moins 10 à 50% en poids de substances tensioactives, calculés sur base de leur teneur en polymères de départ I,

l) la ou les dispersions aqueuses de départ II à apporter, contiennent au moins 1 à 5% en poids de substances tensioactives, calculés sur base de leur teneur en polymères de départ II,

m) la dispersion aqueuse finale de polymère contient de 1 à 5% en poids de substances tensioactives, calculés sur base de la masse totale, formée de la masse du ou des monomères polymérisables par voie radicalaire et des masses des polymères de départ I, II à ajouter sous la forme des dispersions aqueuses de départ I, II,

n) la quantité de substances tensioactives contenue dans le récipient de polymérisation à chaque instant depuis le début de la polymérisation radicalaire en émulsion aqueuse, à l'exception des quantités minimales, mentionnées en k), l), des substances tensioactives apportées dans le récipient de polymérisation, vaut moins de 5%, calculés sur base des monomères déjà apportés précédemment dans le récipient de polymérisation, et

o) la quantité totale apportée d'amorceurs de polymérisation radicalaire vaut de 0,1 à 5% en poids, calculés sur base de la quantité totale du ou des monomères à polymériser par voie radicalaire, et est apportée dans le récipient de polymérisation au cours de la polymérisation radicalaire en émulsion aqueuse de telle sorte que la polymérisation radicalaire en émulsion aqueuse se poursuit jusqu'à un rendement minimal de polymérisation d'au moins 90% molaires, calculés sur base de la quantité totale du ou des monomères à polymériser.

**2.** Dispersion aqueuse finale de polymère selon la revendication 1, pouvant être obtenue en ce que l'on utilise en tant que la ou les dispersions aqueuses de départ II des dispersions aqueuses finales de polymère selon la revendication 1.

**3.** Dispersion aqueuse finale de polymère selon les revendications 1 ou 2, pouvant être obtenue en ce que l'on utilise en tant que la ou les dispersions aqueuses de départ II des dispersions aqueuses finales de polymère selon la revendication 1, en ce que l'on utilise au moins une partie de la dispersion aqueuse finale de polymère ainsi obtenue dans un cycle ultérieur, pour obtenir une dispersion aqueuse finale de polymère suivante selon la revendication 1 ou 2, sous la forme d'au moins une dispersion aqueuse de départ II, et que l'on poursuit éventuellement le mode opératoire cyclique ainsi décrit.

**4.** Dispersion aqueuse finale de polymère selon la revendication 1, pouvant être obtenue en ce que l'on utilise en tant que la ou les dispersions aqueuses de départ II une telle dispersion qui présente la distribution granulométrique suivante :

5 à 25% en poids du polymère de départ II $\leq$ 200 nm
15 à 40% en poids du polymère de départ II $\leq$ 400 nm
35 à 75% en poids du polymère de départ II $\leq$ 600 nm
45 à 90% en poids du polymère de départ II $\leq$ 800 nm
100% en poids du polymère de départ II $\leq$ 1600 nm

**5.** Dispersion aqueuse finale de polymère selon les revendications 1 à 4, pouvant être obtenue en ce que le polymère de départ I est présent dans la ou les dispersions aqueuses de départ I sous la forme de particules dispersées de polymère de départ, dont le diamètre moyen en poids des particules est situé dans la plage de 25 à 45 nm.

**6.** Dispersion aqueuse finale de polymère selon les revendications 1 à 5, qui contient au moins une substance tensioactive de la formule générale I :

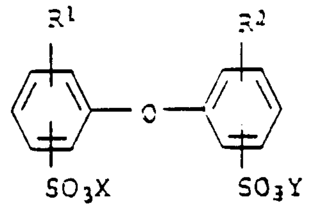

(I)

dans laquelle $R^1$ et $R^2$ représentent l'hydrogène ou un radical alkyle en $C_4$ à $C_{24}$ et ne représentent pas simultanément l'hydrogène, et X et Y peuvent être des ions de métaux alcalins et/ou ammonium.

**7.** Dispersion aqueuse finale de polymère selon les revendications 1 à 6, dont la concentration en volume des solides est ≥ 65% en volume.

**8.** Procédé pour la préparation d'une dispersion aqueuse finale de polymère qui présente une concentration en volume de solides d'au moins 50% en volume, caractérisé en ce que l'on polymérise dans un récipient de polymérisation, par le procédé de polymérisation radicalaire en émulsion aqueuse, en présence de substances tensioactives et d'amorceurs de polymérisation radicalaire, au moins un monomère polymérisable par voie radicalaire, avec addition d'au moins une dispersion aqueuse I de départ d'un polymère de départ I et addition d'au moins une dispersion aqueuse de départ II d'un polymère de départ II, avec les conditions suivantes :

a) le polymère de départ I est présent dans la ou les dispersions aqueuses de départ I sous la forme de particules dispersées du polymère de départ I dont le diamètre moyen en poids, différent de zéro, des particules, est inférieur ou égal à 50 nm,
b) la masse du ou des polymères de départ I ajoutés, rapportée à la masse totale formée de la masse du ou des monomères polymérisables par voie radicalaire et de la masse des polymères de départ I, II ajoutés sous forme de dispersions aqueuses de départ I, II, vaut 0,2 à 0,7%,
c) le polymère de départ II est présent dans la ou dans les dispersions aqueuses de départ II sous forme de particules de polymère de départ II dispersées, dont au plus 60% de la masse totale présentent un diamètre de particules différent de zéro et < 200 nm et dont au moins 40% de la masse totale présentent un diamètre de particules > 200 nm,
d) la masse du ou des polymères de départ II, rapportée à la masse totale formée de la masse du ou des monomères polymérisables par voie radicalaire et de la masse des polymères de départ I, II ajoutés sous la forme de dispersions aqueuses de départ I, II, vaut de 2 à 20%,
e) de la masse totale de la dispersion aqueuse de départ I qu'il faut au moins ajouter, rien n'est présent dans le récipient de polymérisation avant le début de la polymérisation radicalaire en émulsion aqueuse,
f) la masse totale de la ou des dispersions aqueuses de départ II à ajouter est placée dans le récipient de polymérisation avant le début de la polymérisation radicalaire en émulsion,
g) de la masse totale du ou des monomères à polymériser, rien n'est placé dans le récipient de polymérisation avant le début de la polymérisation radicalaire en émulsion aqueuse,
h) la masse totale du ou des monomères à polymériser est apportée dans le récipient de polymérisation à partir du début de la polymérisation radicalaire en émulsion aqueuse de telle sorte qu'à chaque instant de cet apport, le rendement de polymérisation de la totalité des monomères déjà apportés précédemment dans le récipient de polymérisation est d'au moins 80% molaires,
i) à chaque instant après le début de la polymérisation radicalaire en émulsion aqueuse, le rapport V du nombre de moles des particules du polymère de départ I déjà apportées précédemment dans le récipient de polymérisation sous la forme d'une ou de dispersions aqueuses de départ I, au nombre de moles de la quantité, déjà apportée précédemment dans le récipient de polymérisation, du ou des monomères à polymériser par voie radicalaire, rapporté au rapport du nombre de moles de la totalité des particules de polymère de départ à apporter sous la forme d'une ou de dispersions aqueuses de départ I au nombre de moles de la totalité des monomères à polymériser par voie radicalaire, est situé dans la plage de > 0 à 10,
j) au plus encore 20% molaires de la quantité totale du ou des monomères à polymériser par voie radicalaire sont apportés dans le récipient de polymérisation avant que soit terminé l'apport de la quantité totale à apporter de la ou des dispersions aqueuses de départ I,
k) la ou les dispersions aqueuses de départ I à ajouter contiennent au moins 10 à 50% en poids de substances tensioactives, calculés sur base de leur teneur en polymères de départ I,
l) la ou les dispersions aqueuses de départ II à apporter, contiennent au moins 1 à 5% en poids de substances tensioactives, calculés sur base de leur teneur en polymères de départ II,

m) la dispersion aqueuse finale de polymère contient de 1 à 5% en poids de substances tensioactives, calculés sur base de la masse totale, formée de la masse du ou des monomères polymérisables par voie radicalaire et des masses des polymères de départ I, II à ajouter sous la forme des dispersions aqueuses de départ I, II,
n) la quantité de substances tensioactives contenue dans le récipient de polymérisation à chaque instant depuis le début de la polymérisation radicalaire en émulsion aqueuse, à l'exception des quantités minimales, mentionnées en k), l), des substances tensioactives apportées dans le récipient de polymérisation, vaut moins de 5% en poids, calculés sur base des monomères déjà apportés précédemment dans le récipient de polymérisation, et
o) la quantité totale apportée d'amorceurs de polymérisation radicalaire vaut de 0,1 à 5% en poids, calculés sur base de la quantité totale du ou des monomères à polymériser par voie radicalaire, et est apportée dans le récipient de polymérisation au cours de la polymérisation radicalaire en émulsion aqueuse de telle sorte que la polymérisation radicalaire en émulsion aqueuse se poursuit jusqu'à un rendement minimal de polymérisation d'au moins 90% molaires, calculés sur base de la quantité totale du ou des monomères à polymériser.

**9.** Utilisation d'une dispersion aqueuse finale de polymère selon les revendications 1 à 7 comme liants ainsi que comme masses pour la préparation d'enduits et de colles.